(19) Europäisches Patentamt

European Patent Office

Office européen des brevets

(11) **EP 1 018 391 A1**

(12) **EUROPEAN PATENT APPLICATION**
published in accordance with Art. 158(3) EPC

(43) Date of publication:
**12.07.2000 Bulletin 2000/28**

(51) Int. Cl.⁷: **B23K 26/00**, H01J 9/26

(21) Application number: **99910798.0**

(86) International application number:
**PCT/JP99/01711**

(22) Date of filing: **31.03.1999**

(87) International publication number:
**WO 99/51385 (14.10.1999 Gazette 1999/41)**

(84) Designated Contracting States:
**DE FR GB**

(30) Priority: **02.04.1998 JP 9045798**
**12.02.1999 JP 3404699**

(71) Applicant:
**MATSUSHITA ELECTRIC INDUSTRIAL CO., LTD.**
**Kadoma-shi, Osaka 571-8501 (JP)**

(72) Inventors:
• **TAKEDA, Mamoru**
**Kyoto 619-0237 (JP)**
• **HORIUCHI, Makoto**
**Sakurai-shi,Nara 633-0062 (JP)**

• **KURIMOTO, Yoshitaka**
**Osaka 569-1121 (JP)**
• **MEGURO, Takeshi**
**Osaka 567-0831 (JP)**
• **SAKODA, Motomi**
**Osaka 569-1042 (JP)**

(74) Representative:
**Altenburg, Udo, Dipl.-Phys.**
**Patent- und Rechtsanwälte**
**Bardehle - Pagenberg - Dost - Altenburg -**
**Geissler - Isenbruck,**
**Galileiplatz 1**
**81679 München (DE)**

(54) **METHOD AND DEVICE FOR FUSE-CONNECTION OF MATERIAL WITH HIGH MELTING POINT**

(57) A welding apparatus maintains an object to be welded (3, 201) at a pressure (P4, P5) lower than a pressure of the surroundings thereof (P3), and irradiates the object (3, 201) with a laser beam (L). Moreover, the welding apparatus presses a melted portion (4, 207) of the object (3, 201) against the melted portion (4, 207) by the difference between the pressure of the surroundings (P3) and the internal pressure (P4, P5) of the object (3, 201), to weld the object (3, 201). Thus, the melted portion is inwardly shrunk by the pressure evenly exerted on the object. As a result, the object can be securely welded.

Fig. 11

EP 1 018 391 A1

## Description

TECHNICAL FIELD

The present invention relates to methods and apparatus for fusing and bonding high-melting materials such as vitreous silica and ceramics with laser beams, and more specifically to a welding method and an apparatus for fusing and hermetically sealing a vessel made of such high-melting material.

BACKGROUND ART

A gas welding method is used to fuse a material having a high melting point such as glass and ceramics in order to weld or vacuum-seal the material to/with such high-melting material or a different material such as metal. The gas welding method generally utilizes a propane/oxygen, hydrogen/oxygen, or Ar (argon) arc as a heat source. Particularly, in the process of manufacturing a lamp made of vitreous silica, it is necessary to thermally fuse a part of a vessel made of vitreous silica with a gas burner to seal up a W (tungsten) / Mo (molybdenum) material, which is to be an electrode of the lamp, in the vitreous silica vessel (lamp) in a vacuum-sealed state.

However, it is difficult to narrow the flame of the gas burner pointedly, and therefore the surroundings of the heated portion is undesirably heated. Moreover, even if the flame is pointed, when the temperature of the directly heated portion reaches a desired one, the surroundings thereof is indirectly heated by the conducted heat to undesirably rise in temperature remarkably since the high-melting ceramics and the like has high thermal conductivity. This is true to vitreous silica having low thermal conductivity when required to be precisely processed. As is known from the above, when the gas burner is used, there is little difference between the temperature of the directly heated portion and the surroundings thereof. This leads to a problem that it is very difficult to locally heat and fuse only the desired portion of the high-melting material.

To manufacture, for example, a compact high-pressure mercury lamp and metal halide lamp, it is required to vacuum-seal a high vapor-pressure material such as mercury in a glass tube. In this case, in order to prevent the mercury from evaporating due to the heat of the indirectly heated portion, it is necessary to make temperature differentials large locally around the heated portion. This can be attained by cooling the surroundings of the directly heated portion. However, this method is difficult to realize in terms of the manufacture cost and workability. In addition, if the application of heat with the gas burner is reduced to prevent the temperature of the indirectly heated portion from rising, the portion to be fused can not be sufficiently heated. Moreover, in this case, it takes much time to raise the temperature. Resultantly, it is very difficult to make temperature differentials large locally around the heated portion. Thus, when the gas burner is used, the temperature of the heated portion and the surroundings thereof can not be properly controlled, and as a result, the sealing process becomes extremely difficult. Consequently, there occurs a problem that the yield of the lamps can not be increased.

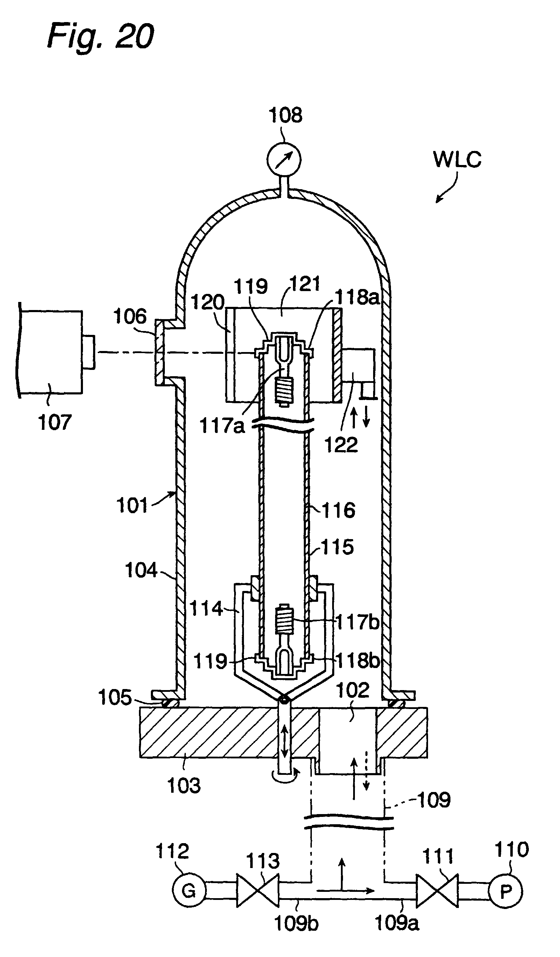

In FIG. 20, schematically shown is a welding apparatus proposed in Japanese Patent Laying Open No. 55-24327 which melts a frit using a laser beam as heating means in order to solve the above problems caused by the use of a gas burner. In the drawing, WLC is a welding apparatus for manufacturing a discharge lamp such as a high-pressure sodium lamp by irradiating the object to be fused with a laser beam and thereby melting a frit. The object to be fused is placed in a vessel sealed in a vacuum state, and surrounded by a reflector.

The laser welding apparatus WLC has an airtight vessel 101 assembled by hermetically mounting a vessel body 104 on a substrate 103 having a bleeder 102 via packings 105. A laser beam generator 107 is placed outside of a laser penetrable window 106 provided on a part of the upper surface of the airtight vessel 101. A pressure gauge 108 for measuring the internal pressure of the airtight vessel 101 is provided on the top of the airtight vessel 101. A vent pipe 109 is provided with the bleeder 102. A vacuum pump 110 is connected to a branch pipe 109a, which is branched from the middle point of the vent pipe 109, via an opening/shutting valve 111. Inert gas such as Ne (neon) is supplied to another branch pipe 109b from a gas cylinder 112 via a valve gear 113.

Note that a thermal fusion sealing material 119 such as glass solder is provided in an object to be sealed 115 between a closing unit 118a having an electrode 117a and the upper end of a luminescence tube 116. Similarly, the thermal fusion sealing material 119 is also provided between a closing unit 118b having an electrode 117b and the lower end of the luminescence tube 116.

The object 115 which is a discharge lamp is detachably held by a bifurcated holder 114 provided slidably and rotatably with respect to the center axis of the substrate 103 such that the thermal fusion sealing material 119 is positioned on the optical path of the laser penetrable window 106. In the airtight vessel 101, an arc-shaped reflector 121 having a space 120 surrounds the object 115 from outside correspondingly to the laser beam path, and is supported by a supporter 122 so as to be movable upward and downward.

The object to be sealed 115 is placed in the holder 114, and the opening/shutting valve 111 is opened to drive the vacuum pump 110 and exhaust air from the airtight vessel 101. After the pressure gauge 108 measures that the pressure in the airtight vessel 101 is evacuated to approximately 0.0001Torr to 0.000001Torr, the opening/shutting valve 111 is closed and thereby the vacuum pump 110 is stopped. In this manner, the inside of the object 115 is evacuated. Thereafter, a laser beam is radiated to the thermal fusion sealing material 119 in the object 115 through the laser penetrable window 106 and the space 120 to thermally melt the thermal fusion sealing material 119. Thus, the upper portion of the luminescence tube 116 and the closing unit 118a are sealed with each other.

In this procedure, the heat energy of the laser beam heats the object 115 and the radiant energy of the heating is reflected by the reflector 121 to synergistically heat the object 115. At the same time, the holder 114 is slowly rotated to uniformly heat and weld the object 115 and the thermal fusion sealing material 119, and as a result the upper end of the object 115 is hermetically sealed.

Next, after the upper end of the object 115 is sealed up, the object 115 is turned upside down so that the thermal fusion sealing material 119 in the lower end is positioned on the laser beam path. The opening/shutting valve 111 is then closed, and the valve gear 113 is opened to take in the above-described inert gas (sealing gas) into the airtight vessel 101 until the pressure gauge 108 indicates approximately 25Torr. When the introduction of the sealing gas is finished, the thermal fusion sealing material 119 in the object 115 is melted by the laser beam from the laser beam generator 107 as in the case with the above-described sealing of the upper end, thereby hermetically sealing the lower end to complete a discharge lamp.

Welding apparatus for melting a frit with a laser beam are also proposed as the above-mentioned heating means in Japanese Patent Laying Open No. 55-64338 and Japanese Patent Laying Open No. 56-42940. Theses apparatus additionally include pressing means for pressing a frit melted with laser irradiation against the welding apparatus proposed in Japanese Patent Laying Open No. 55-24327.

In the above-described laser thermal fusing apparatus proposed in Japanese Patent Laying Open No. 55-24327, it is necessary to fill the sealing gas in the airtight vessel, maintained under vacuum of approximately 0.0001Torr to 0.000001Torr, until the internal pressure reaches substantially 25Torr. In addition, in the laser thermal fusing apparatus, the thermal fusion sealing material is melted to adhere to the end of the closing unit 118 and the object 115, thereby sealing the object 115. The thermal fusion sealing material 119 and the closing unit 118 are simply placed on the end of the object 115.

That is to say, since there is no force except the weight of the thermal fusion sealing material 119 and the closing unit 118, the thermal fusion sealing material 119, when melted, is deformed to run with the aid of its own weight. The closing unit 118, however, is not deformed since it is not melted. Resultantly, the closing unit 118 and the thermal fusion sealing material 119 can not adhere to each other without a gap therebetween. Even if the closing units 118 and thermal fusion sealing material 119 are fused at the same time in order to avoid the above problem, it is very difficult to glue them together without a gap only with the aid of their own weight. As a result, the yield of the lamps can not be increased. Moreover, when the closing unit 118 and the object to be sealed 115 are made of low thermoplastic materials such as ceramics, it is substantially impossible to glue them together without a gap.

Furthermore, since the object 115 and closing unit 118 are sealed at normal atmospheric temperatures in a vacuum state regardless of whether they are made of ceramics or quartz, it is impossible to hermetically seal the object 115 so that the internal pressure thereof after the sealing is higher than normal atmospheric pressures.

To irradiate the laser beam in the airtight vessel, it is required to fill the airtight vessel with sealing gas. In the case where the object to be vacuum-sealed is a vitreous silica tube and the like, it is very difficult to be completely seal the vitreous silica tube unless there is a difference between the internal pressure and the external pressure thereof. Therefore, the tube must be elongated while being fused in order to be sealed. In addition, a ceramic or vitreous silica tube is very difficult to be vacuum-sealed in the state that the internal pressure thereof is higher than normal atmospheric pressures.

To weld or vacuum-seal a ceramic tube and a cermet used to connect an electrode, the ceramic tube and the cermet are fused by high-frequency inductive heating. Workability in such high-frequency inductive heating is well improved by ensuring sharp variations in temperature around the heated portion. However, it is very difficult to weld the ceramic tube and the cermet only by fusing them. It is substantially still impossible to vacuum-seal them.

On the other hand, the apparatus proposed in Japanese Patent Laying Open No. 55-64338 and Japanese Patent Laying Open No. 56-42940 are suitable for sealing the object by pressing the closing unit to the open end of the object, but can not seal the object without the closing unit.

DISCLOSURE OF THE INVENTION

The present invention has the following features to attain the object above.

A first aspect of the present invention is directed to a welding apparatus irradiating an object made of either vitreous silica or ceramics with a laser beam to thermally fuse and bond the object, comprising:

an internal pressure regulator for reducing the internal pressure of the object to a second pressure lower than a first pressure which is the atmosphere pressure of the object, and maintaining the second pressure; and

a thermal fusing unit for irradiating a predetermined portion of the object, whose internal pressure is reduced and maintained, with the laser beam to thermally fuse the predetermined portion,

the thermally fused portion of the object being shrunk and welded by the difference between the first pressure and the second pressure.

As described above, in the first aspect, it is possible to shrink and securely weld the thermally fused portion by the external atmosphere pressure evenly exerted on the object.

According to a second aspect, in the first aspect, further comprising an inert atmospheric apparatus for maintaining the object, whose internal pressure is reduced, in an inert atmosphere at the first pressure and penetrating the laser beam toward the predetermined portion of the object, wherein the thermally fused portion is shrunk and welded by the pressure of the inert atmosphere.

As stated above, in the second aspect, the object is thermally fused and shrunk to be welded in the inert atmosphere in which the object is maintained at a positive pressure. Accordingly, it is possible to prevent the object from being deteriorated in quality due to oxidation.

According to a third aspect, in the second aspect, wherein the laser beam is radiated toward the object from the outside of the inert atmospheric apparatus.

As described above, in the third aspect, the laser beam generator can be placed outside of the inert atmospheric apparatus, thereby simplifying the structure of the entire welding apparatus.

According to a fourth aspect, in the third aspect, wherein the inert atmospheric apparatus includes a laser beam penetrable part for penetrating the laser beam.

As mentioned above, in the fourth aspect, it is possible to irradiate the object, which is maintained in the inert atmosphere at the positive pressure, with the laser beam emitted from an external and heat the object.

According to a fifth aspect, in the fourth aspect, wherein the laser beam penetrable part is made of a material mainly composed of vitreous silica in the case where the laser beam is either a YAG laser or an excimer laser.

As described above, in the fifth aspect, the object is efficiently heated by the laser beam since the loss produced by penetration of a YAG laser and an excimer laser is small in the vitreous silica.

According to a sixth aspect, in the fourth aspect, wherein the laser beam penetrable part is made of a material mainly composed of ZnSe in the case where the laser beam is a $CO_2$ laser.

As stated above, in the sixth aspect, the object is effectively heated by the laser beam since the loss produced by penetration of a $Co_2$ laser is small in ZnSe.

According to a seventh aspect, in the fourth aspect, wherein the laser beam penetrating unit gathers the laser beam on the object.

As described above, in the seventh aspect, the laser beams can be gathered on the object through the laser penetrable window, which eliminates the need of an additional light gathering system of the laser beam.

According to an eighth aspect, in the second aspect, wherein the inert atmosphere is inert gas selected from an inert gas group including noble gas and nitrogen gas.

According to a ninth aspect, in the second aspect, wherein the inert atmospheric apparatus includes:

a sucker for sucking the inert gas to take in the same;

a refiner for removing impurities from the sucked inert gas to refine the same; and

a returning unit for returning the refined inert gas to the inert atmospheric apparatus.

As mentioned above, in the ninth aspect, by using the refiner and the returning unit, it is possible to maintain the inert atmosphere consistently clean.

According to a tenth aspect, in the ninth aspect, wherein the refiner is provided outside of the inert atmospheric apparatus.

As described above, in the tenth aspect, the refiner is placed outside of the inert atmospheric apparatus, thereby facilitating maintenance of the refiner. It is also possible to prevent the interior of the inert atmospheric apparatus from being polluted.

According to an eleventh aspect, in the second aspect, wherein then external atmosphere pressure of the inert atmospheric apparatus is higher than the second pressure, and lower than the first pressure.

As stated above, in the eleventh aspect, the internal pressure of the inert atmospheric apparatus is set larger than the external atmosphere pressure thereof. Therefore, the difference between the internal pressure of the inert atmospheric apparatus and the internal pressure of the object can be set at a large value, which enables the object to be welded with a larger shrinking power.

According to a twelfth aspect, in the eleventh aspect, wherein the first pressure is higher than the external atmosphere pressure by a difference of a water pressure of several mm.

As described above, in the twelfth aspect, the internal pressure of the inert atmospheric apparatus can be readily maintained higher than the external atmosphere pressure thereof by the difference of the water pressure of several mm. Moreover, the difference between the internal pressure of the inert atmospheric apparatus and the internal pressure of the object can be set large enough for shrink welding.

According to a thirteenth aspect, in the first aspect, further comprising a suscepter provided between the predetermined portion of the object and the thermal fusing unit so as to interrupt the laser beam, wherein the heat energy of the laser beam on a first surface thereof is radiated from a second surface thereof to the predetermined portion of the object.

As stated above, in the thirteenth aspect, the energy of the laser beam is once absorbed by the suscepter, and radiated to the object as a heat source. The object can be thus uniformly heated.

According to a fourteenth aspect, in the thirteenth aspect, wherein the suscepter is in a ring shape containing the object therein, and radiates the heat energy of the laser beam received with the outer periphery of the suscepter from the inner periphery thereof to the predetermined portion of the object.

As described above, in the fourteenth aspect, the energy of the laser beam can be intensively radiated to the predetermined portion of the object by means of the suscepter, which makes it possible to effectively heat the desirable portion.

According to a fifteenth aspect, in the fourteenth aspect, wherein the suscepter is rotated about the object, and uniformly heated by the laser beam.

As mentioned above, in the fifteenth aspect, the inner periphery of the suscepter radiating heat rotates around the outer periphery of the object. This enables uniform heating of the object.

According to a sixteenth aspect, in the first aspect, further comprising a cooling unit for partially cooling the object.

As described above, in the sixteenth aspect, the object is locally cooled. Thus, distribution in temperature in the object can be more desirable, and the object can be sealed without evaporating the high-vapor pressure material encapsulated in the object.

According to a seventeenth aspect, in the sixteenth aspect, wherein the cooling unit further comprises:

　a refrigerant unit for containing therein any refrigerant of cold air, cooling water, and liquid nitrogen; and
　a refrigerant circulator for taking the refrigerant therein from the refrigerant means, then circulating the sane around the periphery of the object several times, and returning the same to the refrigerant unit.

According to an eighteenth aspect, in the seventeenth aspect, wherein the cooling unit includes

　any one of a nozzle for spraying the refrigerant to the object, and a tank for containing the refrigerant therein to soak the object in the refrigerant.

According to a nineteenth aspect, in the first aspect, wherein the laser beam is radiated substantially uniformly to the outer periphery of the predetermined portion of the object.

As mentioned above, in the nineteenth aspect, the laser beam is radiated uniformly to the object. Accordingly, the irradiated portion of the object is generally heated uniformly.

According to a twentieth aspect, in the nineteenth aspect, wherein the thermal fusing means comprises

　a plurality of laser beam generators.

As described above, in the twentieth aspect, the plurality of laser beam generators are used, thereby heating the object more uniformly than the case where a single laser beam generator is used to irradiate the object.

According to a twenty-first aspect, in the nineteenth aspect, wherein the thermal fusing means comprises

　an optical fiber for branching the laser beam into a plurality of beams and outputting the beams to the outer periphery of the predetermined portion of the object.

As stated above, in the twenty-first aspect, the laser beam generated by the single laser beam generator is branched into a plurality of beams by the optical fiber to irradiate the object. As a result, as compared with the case of radiating the single laser beam to the object, the object can be heated more uniformly.

According to a twenty-second aspect, in the first aspect, wherein the internal pressure regulating means includes:

　an internal pressure detector for detecting the internal pressure of the object;
　a pipe whose one end is connected to an open end of the object; and
　a vacuum pump connected to another end of the pipe for vacuum pumping the inside of the object and thereby making the pressure detected by the internal pressure detector the second predetermined internal pressure.

As described above, in the twenty-second aspect, it is possible to maintain the inside of the object at the predetermined negative pressure by use of the vacuum pump while detecting the internal pressure of the object with the internal pressure detector.

According to a twenty-third aspect, in the first aspect, comprising a rotating holder for holding the end of the object and rotating the object, to uniformly radiate the laser beam over the entire perimeter of the predetermined portion of the object.

As mentioned above, in the twenty-third aspect, the object is rotated in the direction of the perimeter thereof with respect to the laser beam, which enables the laser beam to irradiate the object more uniformly.

According to a twenty-fourth aspect, in the first aspect, further comprising:

a laser beam output detector for detecting the output of the laser beam; and
a laser energy adjuster for controlling the energy of the laser beam based on the detected output of the laser beam.

As described above, in the twenty-fourth aspect, the output of the laser beam is detected. Then, the energy of the laser beam generator is feed back-controlled based on the detected value. Thus, it is possible to heat the object with the appropriate laser output.

According to a twenty-fifth aspect, in the first aspect, comprising a rotating unit for rotating the object about an axis substantially vertical to the laser beam.

As stated above, in the twenty-fifth aspect, the laser beam can be radiated uniformly around the periphery of the object.

According to a twenty-sixth aspect, in the first aspect, further comprising a reflector having its focal point in the vicinity of the predetermined portion of the object to be thermally fused.

As described above, in the twenty-sixth aspect, it is possible to reflect the laser beam radiated to the object by the reflector, and radiate the laser beam to the object again. As a result, the usage efficiency of the laser beam can be improved.

According to a twenty-seventh aspect, in the twenty-sixth aspect, wherein the reflector is in an integral sphere shape, and the predetermined portion of the object is held in the reflector.

As mentioned above, in the twenty-seventh aspect, the reflector is shaped like an integral sphere, which renders the intensity of the laser beam reflected inside of the reflector substantially uniform in the predetermined irradiated portion of the object.

According to a twenty-eighth aspect, in the twenty-seventh aspect, wherein the reflector has:

a first open for inserting the object therein; and
at least one second open for letting in the laser beam,
wherein the laser beam entered from the second open is reflected inside of the integral-globe-shaped reflector to uniformly irradiate and heat the predetermined portion of the object inserted from the first open.

As described above, in the twenty-eighth aspect, the opens are provided in the integral-globe-shaped reflector. This makes it possible to hold the object inside of the reflector and radiate the laser beam to the held object.

According to a twenty-ninth aspect, in the twenty seventh aspect, wherein the reflector further has

an open for aspirating dust included inside of the reflector.

As stated above, in the twenty-ninth aspect, the dust included inside of the reflector can be aspirated and exhausted from the open provided for aspirating the dust.

According to a thirtieth aspect, in the twenty-seventh aspect, further comprising a cooling unit on the outer periphery side of the reflector, to cool the reflector.

As described above, in the thirtieth aspect, the reflector is cooled by the cooling unit placed on the outer periphery side of the reflector. It is thus possible to protect the reflector from the high temperature caused by radiating the object with the laser beam, which is continuously reflected therein, without interfering the laser beam.

According to a thirty-first aspect, in the first aspect, comprising a moving unit for moving the laser beam in the direction substantially parallel to the object.

As mentioned above, in the thirty-first aspect, the object is moved in the direction substantially parallel to the laser beam, thereby uniformly radiating the laser beam to the part of the object elongating in the direction of the length thereof.

According to a thirty-second aspect, in the first aspect, comprising:

a pair of molding dies opposing to each other while sandwiching the object therein, and having opposing surfaces substantially parallel to the object; and
a molding die moving unit for moving the pair of molding dies in the direction substantially vertical to the object,
wherein the thermal fused portion is sandwiched by the pair of opposing surfaces to be pressed and molded.

As described above, in the thirty-second aspect, it is possible to weld the fused portion more securely by pressing and molding the fused portion, which is shrunk and bonded by the negative pressure, by the molding dies.

According to a thirty-third aspect, in the first aspect, wherein the laser beam is any one of a YAG laser, an excimer laser, a $Co_2$ laser, and a semi-conductor laser.

According to a thirty-fourth aspect, in the seventh aspect, further comprising:

a laser beam output detector for detecting the output of the laser beam; and

a light gathering position controller for moving the laser beam penetrating unit gathering light on the optical path thereof based on the detected output of the laser beam.

As stated above, in the thirty-fourth aspect, the laser beam output is detected, and the light gathering unit is moved along the optical axis of the laser beam based on the detected value. It is thus possible to accurately gather the laser beam on the object.

A thirty-fifth aspect is directed to a welding apparatus for welding an object made of either vitreous silica or ceramics by means of a bonding member provided in a predetermined portion of the object, comprising:

an internal pressure regulator for reducing the internal pressure of the object to a second pressure lower than a first pressure which is the atmosphere pressure of the object, and maintaining the second pressure; and

a thermal melting unit for irradiating the bonding member with a laser beam, and thermally melting the bonding member,

the object being welded by the thermally melted bonding member.

As described above, in the thirty-fifth aspect, the object, whose internal pressure is reduced, is thermally fused by being irradiated with the laser beam, and welded by the bonding member to be the desired object.

According to a thirty-sixth aspect, in the thirty-fifth aspect, further comprising an inert atmospheric apparatus for maintaining the object, whose internal pressure is reduced, in an inert atmosphere at the first pressure, and penetrating the laser beam toward the bonding member.

As stated above, in the thirty-sixth aspect, the object, whose internal pressure is reduced, is maintained in the inert atmosphere at the positive pressure. In this state, the bonding member is irradiated with the laser beam, thereby thermally melting without being deteriorated due to oxidation.

According to a thirty-seventh aspect, in the thirty-fifth aspect, further comprising a pressing unit for pressing the object against the thermally melted bonding member.

As described above, in the thirty-seventh aspect, the object is pressed against the thermally melted bonding member. In this way, the bonding member and the object can be bonded together sufficiently.

According to a thirty-eighth aspect, in the thirty-fifth aspect, comprising a rotating holder for holding an end of the object and rotating the same to uniformly radiate the laser beam over the entire perimeter of the predetermined portion of the object.

As mentioned above, in the thirty-eighth aspect, the bonding member is uniformly heated and melted.

According to a thirty-ninth aspect, in the thirty-seventh aspect, wherein the pressing unit

rotates with respect to a rotation axis while holding the end of the object, and includes a holder for moving along the rotation axis.

As described above, in the thirty-ninth aspect, it is possible to uniformly heat the portion to be bonded by rotating the object and press the same against the thermally melted bonding member.

According to a fortieth aspect, in the thirty-ninth aspect, wherein the pressing unit are both lathes.

According to a forty-first aspect, in the first aspect, further comprising a dust collector for removing evaporated substances generated in the vicinity of a vitreous silica tube or a ceramic tube to be welded or vacuum-sealed.

According to a forty-second aspect, in the second aspect, wherein the inert atmospheric apparatus includes a dust collector for removing evaporated substances generated in the vicinity of a vitreous silica tube or a ceramic tube to be welded or vacuum-sealed.

A forty-third aspect is directed to a welding method of irradiating an object made of either vitreous silica or ceramics with a laser beam, and thermally fusing and bonding the object, comprising:

an internal pressure regulating step of reducing the internal pressure of the object to a second pressure lower than a first pressure which is the atmosphere pressure of the object, and maintaining the second pressure;

a thermal fusing step of irradiating a predetermined portion of the object, whose internal pressure is reduced and maintained, with the laser beam to thermally fuse the predetermined portion; and

a bonding step of shrinking and welding the thermally fused portion of the object by the difference between the first pressure and the second pressure.

As stated above, in the forty-third aspect, it is possible to securely weld the thermally fused portion by inwardly shrinking with the aid of the external atmosphere pressure exerted evenly on the object.

According to a forty-fourth aspect, in the forty-third aspect, further comprising the steps of:

maintaining the object, whose internal pressure is reduced, in an inert atmosphere at the first pressure; and

penetrating the laser beam toward the predetermined portion of the object,

wherein the thermally fused portion is shrunk and welded by the inert atmospheric pressure.

As stated above, in the forty-four aspect, the object is thermally fused and shrink-welded in the inert atmosphere where the object is maintained at the positive pressure, thereby preventing the object from deteriorating in quality due to oxidation.

According to a forty-fifth aspect, in the forty-third aspect, further comprising the steps of:

receiving the laser beam on a first surface of a suscepter provided between the predetermined portion of the object and the thermal fusing means so as to interrupt the laser beam, and absorbing the heat energy of the laser beam; and
a step of radiating the heat energy absorbed on the first surface of the suscepter from a second surface of the suscepter to the predetermined portion of the object.

As described above, in the forty-fifth aspect, the energy of the laser beam is once absorbed by the suscepter, and radiated to the object as a heat source, thus heating the object more uniformly.

According to a forty-sixth aspect, in the forty-third aspect, further comprising the step of pressing and molding the thermally fused portion by moving a pair of molding dies in the direction substantially vertical to the object and by sandwiching the thermal fused portion by a pair of opposing surfaces of the pair of molding dies, the pair of molding dies opposing to each other while sandwiching the object therein and having the pair of opposing surfaces substantially parallel to the object.

As stated above, in the forty-sixth aspect, the fused portion, which is shrink-welded by the negative pressure, is further pressed and molded by the molding dies. This makes it possible to weld the object more securely.

A forty-seventh aspect is directed to a welding method of welding an object made of either vitreous silica or ceramics by means of a bonding member provided in a predetermined portion of the object, comprising:

an internal pressure regulating step of reducing the internal pressure of the object to a second pressure lower than a first pressure which is the atmosphere pressure of the object, and maintaining the second pressure; and
a thermal melting step of irradiating the bonding member with a laser beam, and thermally melting the bonding member,
the object being welded by the thermally melted bonding member.

As described above, in the forty-seventh aspect, the object, whose internal pressure is reduced, is thermally fused by being irradiated with the laser beam.

According to a forty-eighth aspect, in the forty-seventh aspect, further comprising a pressing step of pressing the object against the thermally melted bonding member.

As stated above, in the forty-eighth aspect, the object is pressed against the thermally melted bonding member, thereby making it possible to sufficiently bond and securely weld the bonding member and the object.

According to a forty-ninth aspect, in the forty-seventh aspect, further comprising the steps of:

maintaining the object, whose internal pressure is reduced, in an inert atmosphere at the first pressure; and
penetrating the laser beam toward the bonding member.

As described above, in the forty-ninth aspect, the object, whose internal pressure is reduced, is maintained in the inert atmosphere at the positive pressure. In this state, the bonding member is irradiated with the laser beam, thereby thermally melting without deteriorating due to oxidation.

According to a fiftieth aspect, in the forty-ninth aspect, further comprising the step of pressing the object against the thermally melted bonding member.

As mentioned above, in the fiftieth aspect, the object is pressed against the thermally melted bonding member. It is thus possible to sufficiently bond and securely weld the bonding member and object together.

BRIEF DESCRIPTION OF THE DRAWINGS

FIG. 1 is a block diagram showing the structure of a welding apparatus according to a first embodiment of the present invention;
FIG. 2 is a block diagram showing a modification of the welding apparatus shown in FIG. 1;
FIG. 3 is a schematic diagram showing the hermetic structure between the vacuum exhaust duct and sliding portions of the glove box in the welding apparatus shown in FIG. 2;
FIG. 4 is a schematic diagram showing the structure of the laser absorber used in the welding apparatus shown in FIG. 1;
FIG. 5 is a block diagram showing the structure of a welding apparatus according to a second embodiment of the present invention;
FIG. 6 is a block diagram showing the structure of a welding apparatus according to a third embodiment of the present invention;
FIG. 7 is a block diagram showing a modification of the welding apparatus shown in FIG. 6;
FIG. 8 is a block diagram showing the structure of a welding apparatus according to a fourth embodiment of the present invention;

FIG. 9 is a block diagram showing the structure of a welding apparatus according to a fifth embodiment of the present invention;

FIG. 10 is a block diagram showing the structure of a welding apparatus according to a sixth embodiment of the present invention;

FIG. 11 is a block diagram showing the structure of a welding apparatus according to a seventh embodiment of the present invention;

FIG. 12 is a block diagram showing a modification of the welding apparatus shown in FIG. 11;

FIG. 13 is a block diagram showing an example of the welding apparatus shown in FIG. 11;

FIG. 14 is a conceptual plan view of the molding dies in the welding apparatus shown in FIG. 13;

FIG. 15 is a block diagram showing a welding apparatus according to an eighth embodiment of the present invention;

FIG. 16 is a block diagram showing a modification of the welding apparatus shown in FIG. 15;

FIG. 17 is a block diagram showing a welding apparatus according to a ninth embodiment of the present invention;;

FIG. 18 is a block diagram showing a modification of the welding apparatus shown in FIG. 17;

FIG. 19 is a block diagram showing a welding apparatus according to a tenth embodiment of the present invention; and

FIG. 20 is a block diagram showing a conventional welding apparatus using a laser beam.

BEST MODE FOR CARRYING OUT THE INVENTION

Best modes for carrying out the present invention are described below referring to accompanying drawings.

(First Embodiment)

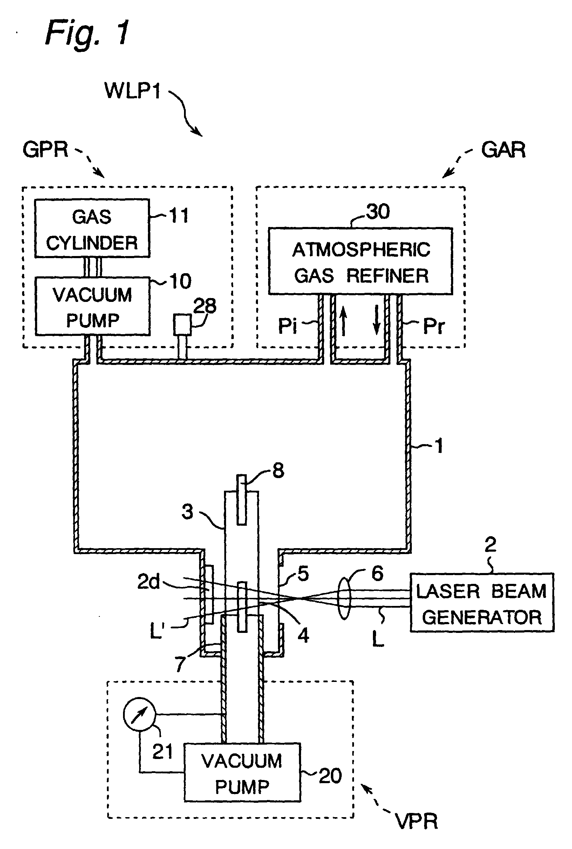

Referring to a block diagram shown in FIG. 1, a welding apparatus according to a first embodiment of the present invention is described. In FIG. 1, an example where a vacuum vessel 3 is placed in a welding apparatus WLP1 is shown. The vacuum vessel 3 is made of vitreous silica or ceramics, and is to be welded or hermetically sealed. The welding apparatus WLP1 has a hermetic glove box 1 in which the outside-air is shut off. A gas cylinder 11 containing nitrogen gas or inert gas such as noble gas is hermetically connected to the glove box 1 through a vacuum pump 10, and thereby the inert gas is pumped into the glove box 1 at a predetermined pressure. Note that a regulating valve 28 is provided in the glove box 1 to maintain an internal pressure P2 of the glove box 1 within a range slightly higher than an outside-air pressure P3 ($P3 < P2 < P3 + \Delta P < P4$) where $\Delta P$ is a water pressure of several cm and P4 is the withstand pressure of the glove box 1. As in the above, the vacuum pump 10, the gas cylinder 11, and the regulating valve 28 form a glove box internal pressure regulating system GPR.

In the glove box 1, a refiner 30 for refining the inert gas is provided. The atmospheric gas refiner 30 is hermetically connected to the glove box 1 through an intake pipe Pi and a return pipe Pr. The atmospheric gas refiner 30 takes in atmosphere gas in the glove box 1 through the intake pipe Pi, then removes impurities such as moisture contained in the atmosphere gas by means of a moisture absorbent and the like, next returns the atmosphere gas to the glove box 1 through the return pipe Pr, and circulates the gas in the glove box 1. The atmosphere gas in the glove box 1 is thus maintained in a low dew-point state having an extremely low moisture contents. As in the above, the atmospheric gas refiner 30, the intake pipe Pi, and the return pipe Pr form a glove box atmospheric refining system GAR.

Outside of the glove box 1, a laser beam generator 2 is placed such that the optical axis of a laser beam L is substantially vertical to the side surface of the vacuum vessel 3 placed in the glove box 1. A YAG laser, an excimer laser, or a $CO_2$ laser is generally used as the laser beam generator 2. To gather the laser beam L radiated from the laser beam generator 2 on the side surface of the vacuum vessel 3 with a condenser 6, a laser beam window 5 is provided on the side wall of the glove box 1 across the optical axis of the laser beam L. Note that the substance capable of penetrating a lot of laser beam L is appropriately selected as the material composing the condenser 6 and laser beam window 5 according to the wavelength of the laser beam L.

In an example of a YAG laser and an excimer laser, since the laser wavelength thereof is approximately 1.06 μm, the material of the laser beam window 5 may be vitreous silica. On the other hand, in the case of a $CO_2$ laser, since the wavelength thereof is 10.6 μm, the optical energy thereof is undesirably absorbed by most substances, and therefore the material of the laser beam window 5 is limited to ZnSe (zinc selenide). Ge (germanium) and the like. On the contrary, the material of the vacuum vessel 3 is preferably the substance absorbing a lot of laser beam L. In the case where a YAG laser or an excimer laser is used, it is obvious that not vitreous silica penetrating the laser beam L but ceramics or metal absorbing the laser beam L must be used as the material of the vacuum vessel 3. In the case of a $CO_2$ laser, most materials other than ZnSe and Ge can be used. However, in actuality, the substance whose main component is ZnSe (zinc selenide; ZnSe is used as the material of the condenser 6) is selected as the material of the laser beam window 5. Ge (germanium) is also usable as the material of the laser beam window 5, but is highly toxic and does not penetrate visible light. Accordingly, ZnSe is more preferable.

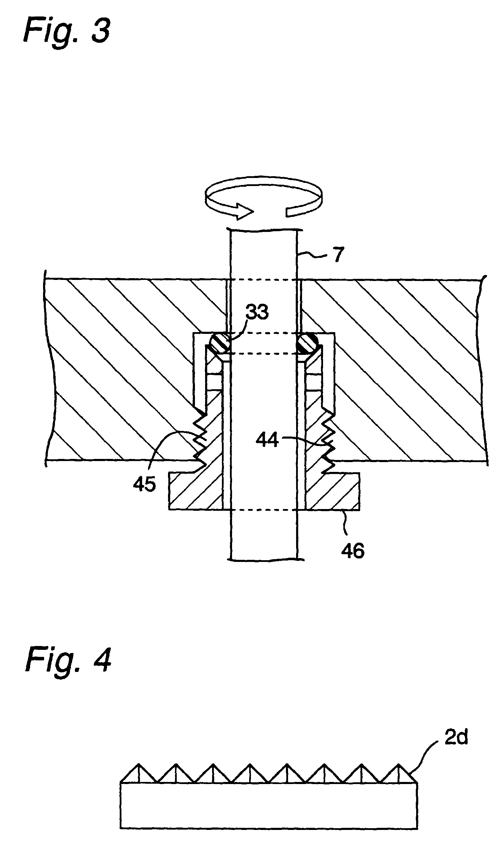

On the side of the glove box 1 opposite to the laser beam window 5, a laser absorber 2d is provided across the optical axis of the laser beam L as in the same manner with the laser beam window 5. A cooling apparatus (not shown) provided outside of the glove box 1 is connected to the laser absorber 2d to cool the laser absorber 2d. The cooling apparatus generally supplies cooling water to a cooling pipe which is provided therein and made of copper. Note that the laser absorber 2d is triangularly ribbed as shown in FIG. 4 so as to effectively absorb a leaked laser beam L'.

The laser beam L emitted from the laser beam generator 2 is gathered in the focal point of the condenser 6 provided in front of the laser beam window 5, and thereafter the diameter of the beam becomes larger. Accordingly, the size of a portion 4 to which the laser beam L is radiated to fuse the vacuum vessel 3 can be freely adjusted by moving the condenser 6 along the optical axis for defocusing.

Moreover, the glove box 1 is hermetically connected to a vacuum pump 20 provided outside thereof through a vacuum exhaust duct 7. One end of the vacuum vessel 3 placed in the glove box 1 is hermetically connected to the vacuum exhaust duct 7, and aspirated by the vacuum pump 20 driven by a pressure regulator 21. At the time when an internal pressure $P1$ of the vacuum vessel 3 is reduced to a predetermined pressure below the internal pressure $P2$ of the glove box 1, the pressure regulator 21 stops the vacuum pump 20. As in the above, the vacuum exhaust duct 7, the vacuum pump 20, and the pressure regulator 21 form a vacuum vessel pressure reducing system VPR.

In the above-prepared welding apparatus WLP1, the laser beam L is radiated to the vacuum vessel 3 from the laser beam generator 2, and thereby the temperature of the irradiated portion 4 instantaneously rises to reach the melting point. Since the internal pressure $P1$ of the vacuum vessel 3 is smaller than the internal pressure $P2$ of the glove box 1, a pressure $P2 - P1$ is exerted on the fused portion 4 from the periphery to the center thereof as the result of radiation of the laser beam to shrink the fused portion 4. Thus, the fused portion 4 bonds together at its center to hermetically seal the end of the vacuum vessel 3. Here, in the case where the vacuum vessel 3 is a lamp and the like as shown in FIG. 1, it is possible to hermetically seal an electrode 8 inserted in the vacuum vessel 3 by fusing the side wall thereof around the electrode 8.

A laser beam L', which is a part of the laser beam L radiated from the laser beam generator 2, is not used to fuse the vacuum vessel 3, but leaks toward the side of the glove box 1 opposite to the laser beam window 5. The leaked laser beam L' is absorbed as heat energy by the absorber 2d, and then discharged to the outside of the glove box 1 by the cooling apparatus. It is thus possible to prevent the glove box 1 from being damaged by the excess laser beam L' which is not used to weld the vacuum vessel 3.

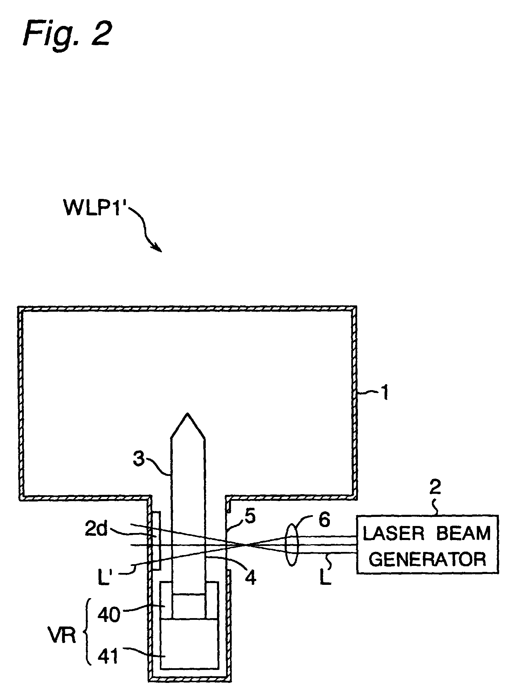

Referring to FIG. 2, a modification of the welding apparatus WLP1 shown in FIG. 1 is described. A welding apparatus WLP1' in the present example has a structure substantially identical to that of the welding apparatus WLP1 shown in FIG. 1, but additionally comprises a holder 40 for rotatably holding the vacuum vessel 3 about a rotational axis, and a rotation motor 41 for rotating the holder 40 preferably in the glove box 1. When the vacuum vessel 3 is thermally fused by the radiated laser beam L, the vacuum vessel 3 is rotated about the axis vertical to the optical axis of the laser beam L to evenly distribute heat conducted to the laser-irradiated portion 4. As in the above, the holder 40 and the rotation motor 41 form a rotation system VR for the vacuum vessel 3. Note that the glove box internal pressure regulating system GPR, the glove box atmospheric refining system GAR, and the vacuum vessel pressure reducing system VPR are not shown in the drawing for simplicity.

Referring to FIG. 3, description is made below of the structure maintaining hermeticity between the vacuum exhaust duct 7 and the glove box 1 in the above-described welding apparatus WLP1'. The hermeticity between the vacuum exhaust duct 7 and the rotating and sliding portion of the glove box 1 is maintained by means of sliding O rings 33 provided between the outer periphery of the vacuum exhaust duct 7 and the inner periphery of the glove box 1. In addition, a roller bearing 46 having a male screw 45, which fits into a female screw 44 provided in the lower part of the inner periphery of the glove box 1, is provided to help rotation of the vacuum exhaust duct 7. It should be noted that as described in the above, the glove box internal pressure regulating system takes in and exhausts the inert gas to maintain the inside of the glove box 1 at the predetermined pressure $P2$. While the rotating means for the vacuum vessel 3 is provided in the glove box 1 to rotate the vacuum vessel 3 in the welding apparatus WLP1' in the example shown in FIG. 2, the rotating means may be provided outside of the glove box 1 to rotate the vacuum exhaust duct 7.

(Second Embodiment)

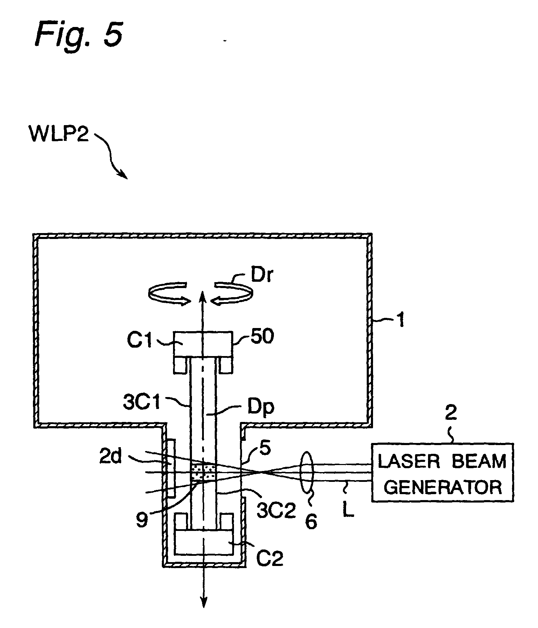

In FIG. 5, a welding apparatus according to a second embodiment of the present invention is shown. A welding apparatus WLP2 in the present example has the same structure as the welding apparatus WLP1 shown in FIG. 1. In the drawing, the glove box internal pressure regulating system GPR and the glove box atmospheric refining system GAR are omitted again for simplicity. In place of the vacuum vessel pressure reducing system VPR, both lathes 50 having chucks C1 and C2 opposing to each other are provided in the glove box 1. The chucks C1 and C2 can respectively move freely to the direction indicated by a double-headed arrow Dp in which they oppose to each other. Besides, the chucks C1 and C2 can freely rotate about a rotation axis of the arrow Dp in the direction indicated by a double-headed arrow Dr. That is, the chucks C1 and C2 have the same function as the vacuum vessel rotation system VR. To the chucks C1 and C2, objects to be bonded 3C1 and 3C2 are respectively attached while holding therebetween a frit 9 which is an adhesive.

In the above-structured welding apparatus WLP2, as in the case with the first embodiment, the laser beam L is radiated to a joint between the objects 3C1 and 3C2 which are rotating or staying still. At the time when the frit 9 is melted, the chucks C1 and C2 are then moved in the Dp direction so as to approach to each other. The objects 3C1 and 3C2 are thus pressed against each other to be welded by the melted frit 9.

In this way, in the present embodiment, the separate objects 3C1 and 3C2 are pressed against the melted frit 9 by means of the both lathes 50 to be bonded to each other. Therefore, the present embodiment is suitable for the case where the objects to be bonded 3C1 and 3C2 are made of low thermoplastic materials such as ceramics.

In the case of bonding the ceramics together, the frit 9 is preferably made of $CaO-Al_2O_3$, $CaO-Al_2O_3-SiO_2$, $MgO-Al_2O_3-SiO_2$ and the like. The frit 9 can be fused at 1000 °C to 1500 °C, and therefore rises in temperature to a predetermined melting temperature after a laps of several seconds since receiving the laser beam L. As described in the above, when the wavelength of the laser beam L is appropriately selected, the energy of the laser beam L can be absorbed only with the aid of the frit 9 even if metal is not added to the frit 9 as in the conventional art. Therefore, a dielectric material can be used as the frit 9.

It is obvious that the vacuum vessel 3 of vitreous silica used in the first embodiment can be used as the objects to be bonded 3C1 and 3C2, and vitreous silica can be also used as the frit 9 to weld the objects 3C1 and 3C2.

(Third Embodiment)

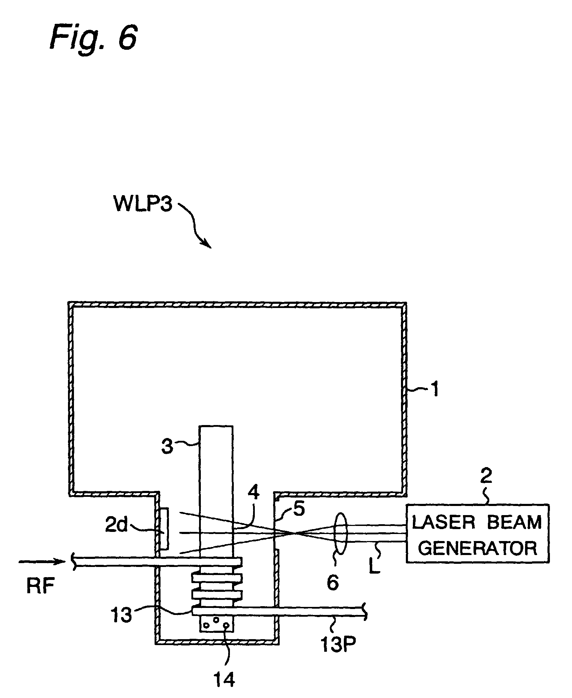

In FIG. 6, a welding apparatus according to a third embodiment of the present invention is shown. A welding apparatus in the present example has the same structure as the welding apparatus WLP1 shown in FIG. 1. In the drawing, the glove box internal pressure regulating system GPR, the glove box atmospheric refining system GAR, and the vacuum vessel pressure reducing system VPR are not shown again for simplicity. A cooling apparatus 13 for cooling the end of the vacuum vessel 3 is newly provided here. The cooling apparatus 13 is connected to a cooling tank (not shown) containing a refrigerant RF such as cold air, cooling water, or liquid nitrogen, and provided outside of the glove box 1. A cooling pipe 13P in which the refrigerant RF flows is provided around the periphery of the end of the vacuum vessel 3.

In the above-structured welding apparatus WLP3, the laser beam L is radiated to the rotating or still vacuum vessel 3 as in the first embodiment. At the time when the irradiated portion 4 is fused, the fused portion 4 becomes shrunk by the difference in the internal pressure (P2 - P1) of the vacuum vessel 3 and the glove box 1, and thereby hermetically sealed. In this case, even if the heat of the fused portion 4 is conducted as far as the end of the vacuum vessel 3, the vacuum vessel 3 can be sealed without evaporating a high vapor pressure material 14 such as mercury encapsulated in the end of the vacuum vessel 3 since the vacuum vessel 3 is sufficiently cooled by the cooling apparatus 13.

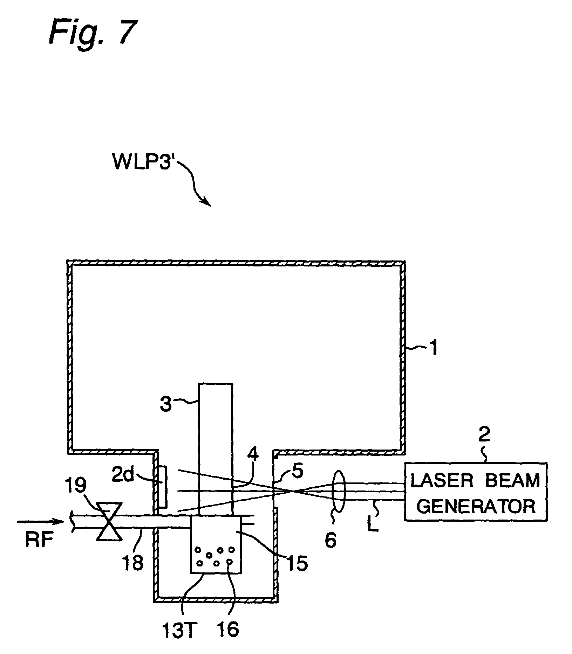

Next, referring to FIG. 7, described below are a welding method and an apparatus for sealing up the vacuum vessel 3 encapsulating therein Xe (xenon) gas at a high pressure (a pressure higher than atmospheric pressures). In the drawing, a modification of the welding apparatus WLP3 according to the above third embodiment is shown. In a welding apparatus WLP3' in the present example, a cooling tank 13T containing a refrigerant is provided as the cooling apparatus 13 in place of the cooling pipe 13P, and shields the periphery of the end of the vacuum vessel 3. The cooling tank 13T is connected to a refrigerant tank (not shown) provided outside of the glove box 1 through an introduction port 18 via a valve 19 provided outside of the glove box 1.

In the above-structured welding apparatus WLP3', the cooling tank 13T stores liquid nitrogen as a refrigerant to soak the end of the vacuum vessel 3 in the liquid nitrogen to cool the vacuum vessel 3. In such condition, the laser beam L is radiated to the rotating or still vacuum vessel 3 to fuse and seal the irradiated portion 4. Note that the melting point and boiling point of xenon are -111.9 °C and -108.1 °C, respectively, on the other hand, the melting point and boiling point of nitrogen are -209.86 °C and -195.8 °C, respectively. Therefore, the end of the vacuum vessel 3 is cooled by the liquid nitrogen stored in the cooling tank 13T to -209.86 °C. Accordingly, the encapsulated xenon gas is liquefied or solidified in the end of the vacuum vessel 3 to reduce the vapor pressure to almost zero. Since the interior of the vitreous silica tube 3 is under reduced pressure as a result, the vitreous silica 3 is inwardly shrunk when fused by the laser beam L, and thereby hermetically sealed.

As shown in FIG. 7, the liquid nitrogen RF is taken in from outside of the glove box 1, and filled in the cooling tank 13T. Instead of soaking a part 15 of the sample to be fused 3 such as vitreous silica which has a high vapor pressure substance 16 in the liquid nitrogen RF, it may be possible to provide a nozzle for spraying the refrigerant RF such as liquid nitrogen to the portion not to be directly heated.

The introduction port 18 to the inside of the glove box 1 is normally closed with the valve 19 so as to shut off the outside air. The internal pressure of the glove box 1 does not rise with the aid of the regulating valve 28 provided to maintain the internal pressure of the glove box 1 at a set value as shown in FIG. 1. Besides, the interior of the glove box 1 is kept in a low dew point state by removing moisture contents therein as much as possible. The flow of the above described liquid nitrogen RF prevents the outside air and the atmosphere of the glove box 1 from being contact with each other, and therefore the dew point in the glove box 1 is not be degraded. If anything, the dew point in the glove box 1 is improved. This is because liquid nitrogen and the like are a cryogenic temperature refrigerant RF, and therefore the moisture contents in the glove box 1 is solidified and then discharged to the outside by the circular refining performed by the glove box atmospheric refining system GAR.

By hermetically sealing a lamp and the like with the above-described welding method and apparatus utilizing the laser beam, it is possible to remove the moisture contents in the lamp, and to significantly increase the life thereof.

(Fourth Embodiment)

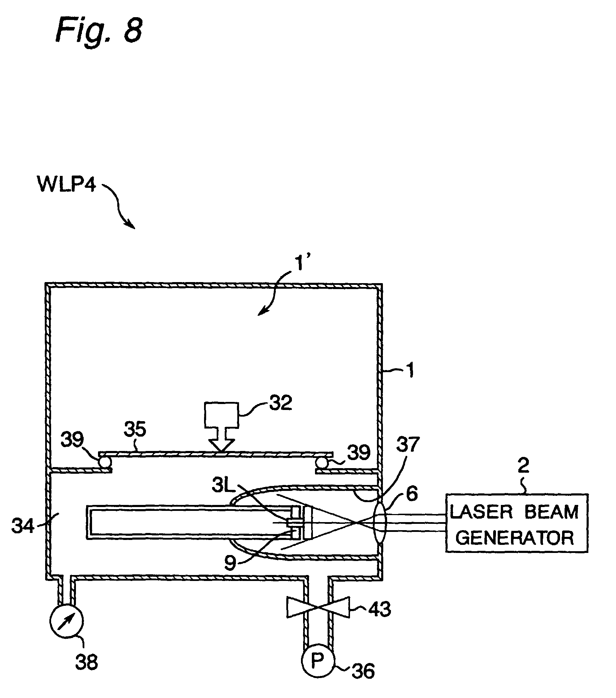

In FIG. 8, a welding apparatus according to a fourth embodiment of the present invention is shown. A welding apparatus WLP4 in the present example has the same structure as the apparatus WLP1 shown in FIG. 1. In the present embodiment, the glove box 1 is hermetically partitioned into a vacuum evacuating section 34 and an original glove box section 1' by a partition 35 and vacuum O rings 39. Note that the glove box internal pressure regulating system GPR and the glove box atmospheric refining system GAR are connected to the original glove box section 1' while they are not shown in the drawing for simplicity. A gas introduction port 32 is provided on the partition 35 to introduce inert gas from the glove box section 1' into the vacuum evacuating section 34.

In the vacuum evacuating section 34, the condenser 6 is provided on the side wall of the glove box 1 across the optical axis of the laser beam generator 2 placed outside of the glove box 1. A reflector 37 elongates from the condenser 6 to the inside of the glove box 1 in the direction of the optical axis of the laser beam L so as to reflect the laser beam L radiated from the laser beam generator 2 and to focus the laser beam L on the focal point. The frit 9 is placed in the portion to be sealed of the vacuum vessel 3, and the vacuum vessel 3 made of ceramics is fixed such that the frit 9 is substantially positioned on the focal point of the condenser 6. Note that in the portion to be sealed, a lid 3L made of ceramics is mounted on the end of the vacuum vessel 3 through the frit 9 made of ceramics.

In addition, the vacuum evacuating section 34 is connected to a vacuum pump 36 via an exhaust valve 43, and has a vacuum gauge 38 for measuring the internal pressure of the vacuum evacuating section 34. As in the above, the exhaust valve 43, the vacuum evacuating section 34, the vacuum pump 36, and the vacuum gauge 38 form the above mentioned vacuum vessel pressure reducing system VPR.

In the welding apparatus WLP4 in the above structure, the exhaust valve 43 is opened to drive the vacuum pump 36, and evacuate gas in the vacuum evacuating section 34. After that, the exhaust valve 43 is closed, and the gas introduction port is opened to take in inert gas in the glove box section 1' into the vacuum evacuating section 34 with the gas pressure checked by the vacuum gauge 38. At the time when the gas pressure in the vacuum evacuating section 34 reaches the predetermined pressure P1, the vacuum pump 36 is closed. While the inert gas in the glove box section 1' is taken into the vacuum evacuating section 34 in the present example, in the case where gas other than the inert gas is required to be taken in, a supply source of such gas, which is the glove box internal pressure regulating system GPR, may be connected to the vacuum evacuating section 34.

Next, the laser beam generator 2 radiates the laser beam L which is enlarged or reduced to a predetermined beam width to the reflector 37 through the condenser 6. Thus, the portion to be fused positioned on the focal point of the reflector 37 evenly receives the heat energy. That is to say, the portion formed by the vacuum vessel 3 including the frit 9 and the lid 3L made of ceramics can be evenly fused. At this time, to hermetically weld the vacuum vessel 3 without a gap, the vacuum vessel 3 is rotated with the lathes 50 shown in FIG. 5, and pressed in the direction of the axis of the ceramic tube 3.

(Fifth Embodiment)

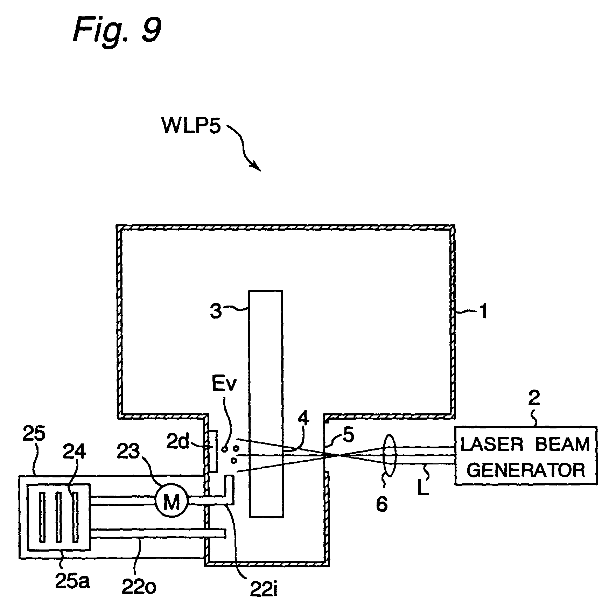

In FIG. 9, a welding apparatus according to a fifth embodiment of the present invention is shown. A welding apparatus WLP5 in the present example has the same structure as the welding apparatus WLP1 shown in FIG. 1, but additionally includes a dust chamber 25 containing a dust collector 25a outside of the glove box 1. A suction pipe 22I and an exhaust pipe 22o are both hermetically connected to the glove box 1 and the dust chamber 25. The end of the suction pipe 22i is positioned in the vicinity of the portion to be fused 4 of the vacuum vessel 3 in the glove box 1. The end of the exhaust pipe 22o is positioned in an arbitrary place in the glove box 1. The suction pipe 22i sucks atmosphere gas in the vicinity of the portion 4 by use of a circulating pump 23 provided on the midpoint of the suction pipe 22i in the dust chamber 25, and sends the gas to the dust collector 25a.

Substances such as waste and dust included in the sucked atmosphere gas is removed by a filter 24 provided in the dust collector 25a, and thereby clean atmosphere gas is returned to the inside of the glove box 1 through the exhaust pipe 22o. When the object to be bonded 3 such as vitreous silica is heated to the temperature around the melting point, fine powders like silica appear as an evaporated substance Ev to soil the inside of the glove box 1 and the laser beam window 5. However, the above structure can solve the problem that the energy of the laser beam L reaching the vacuum vessel 3 is attenuated. Besides, since the dust chamber 25 is isolated from the glove box 1, the filter 24 can be changed without exposing the glove box 1 to the air.

(Sixth Embodiment)

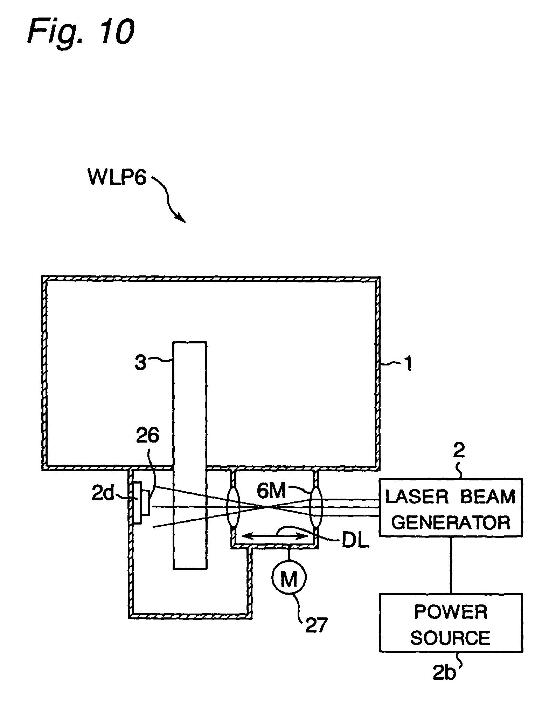

In FIG. 10, a welding apparatus according to a sixth embodiment of the present invention is shown. A welding apparatus WLP6 in the present example has the same structure as the welding apparatus WLP1 shown in FIG. 1, but additionally includes a movable condenser 6M, in place of the laser beam window 5 and the condenser 6, and an output monitor 26 on the surface of the laser absorber 2d.

While the condenser 6 is placed outside of the glove box 1 in the first embodiment, the material of the laser beam window 5 provided in the glove box 1 must be the same as the material of the condenser. In view of the above, the movable condenser 6M is provided in the present embodiment. The movable condenser 6M is obtained by making the condenser 6 hermetically movable with respect to the glove box 1 in DL direction along the optical axis of the laser beam L by means of a motor 27. Besides, the movable condenser 6M is also used as the window material 5. Furthermore, the output monitor 26 is provided on the laser absorber 2d placed on the side opposite to the incoming laser. The output monitor 26 feeds back a monitor signal for monitoring the output of the leaked laser beam L' to a laser power source 2b or the driving motor 27 provided for the movable condenser 6M, thereby heating the object 3 in a stable condition. As a result, the yield is also increased.

As described in the above, by adjusting the emission power and irradiating time of the laser beam generator 2 or the position of the condenser 6, it is possible to weld and hermetically seal the vacuum vessel 3 in a short time of several seconds. Accordingly, the heat welding is performed in the glove box 1 in an inert atmosphere like noble gas and nitrogen gas, which facilitates sealing of a high vapor pressure metal halide and a material susceptible to oxidation in the vitreous silica tube 3.

While the welding of the vacuum vessel 3 is described with an example of the high-melting dielectric material such as vitreous silica and ceramics in the above description, it is obvious that the welding can be applied to metals (for example, Mo, W and the like) susceptible to oxidation. In addition, the welding can be similarly accomplished under vacuum as well as in the inert gas atmosphere to prevent oxidation.

Moreover, it is possible to fuse various-sized portions by moving the focal point of the condenser 6M to defocus the laser beam L and thereby adjust the size of the irradiated portion. Also, the laser beam L has good focal power to cause the temperature to widely vary even in the small area irradiated with the laser beam L in the object to be fused. Consequently, it is possible to locally heat only the portion to be welded regardless of whether the object is a metal or a dielectric material, and to suppress influence of the heat over the portion not to be fused.

Furthermore, when the laser beam is used, temperature can be instantaneously raised by the radiated laser beam unlike in the case of using an electric furnace, thereby making it possible to minimize thermal damage on the portion other than the heated portion. Also, it is not required to adjust the temperature of the inert atmosphere in the glove box 1. Moreover, the laser beam generator for supplying optical energy is placed outside of the glove box, and therefore the glove box is not required to be extensively modified.

(Seventh Embodiment)

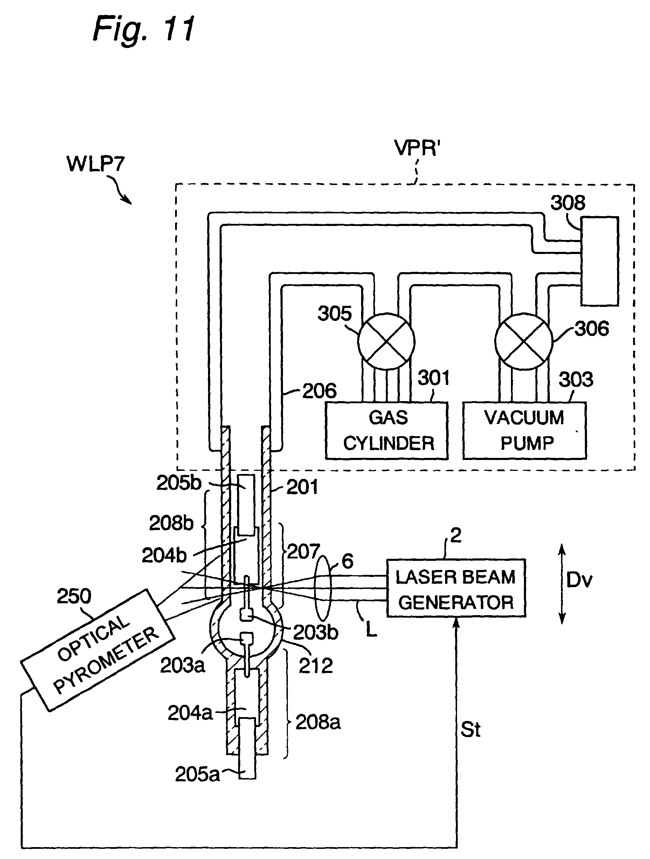

Referring to FIG. 11, a welding apparatus according to a seventh embodiment of the present invention is described below. In a welding apparatus WLP7, the laser beam generator 2 is placed such that the optical axis of the laser beam L is substantially vertical to the direction Dv of the length of a vitreous silica tube 201. As shown in the drawing, the vitreous silica tube 201 is virtually symmetric with respect to the direction Dv. The vitreous silica tube 201 is also substantially symmetric with respect to the plane vertical to the direction Dv in its center part. In a spherical-shaped bulb 212 which is at the center of the vitreous silica tube 201, two discharge electrodes 203a and 203b are held along the direction Dv by a known method while opposing to each other.

The vitreous silica tube 201 is divided into a first electrode part 208a and a second electrode part 208b by the bulb 212 with respect to the direction Dv. In the first electrode part 208a, an Mo (molybdenum) foil 204a for vacuum sealing is connected to the discharge electrode 203a, and an external electrode connection terminal 205a is connected to the Mo foil 204a. Similarly, an Mo (molybdenum) foil 204b for vacuum sealing is connected to the discharge electrode 203b, and an external electrode connection terminal 205b is connected to the Mo foil 204b.

Note that in the drawing, the first electrode part 208a is already vacuum-sealed, and sealing of the second electrode part 208b having an open end is shown by way of example. However, the present invention is also useful in the case where the ends of the first and second electrode parts 208a and 208b are opened by using the method described below .

As is clear from the above, some constituents are described by adding suffixes "a" and "b" to their reference numbers for identification. For example, the first and second electrode parts 208a and 208b are described herein as the electrode parts 208 to separately identify the first and second electrode parts. In addition, as to the discharge electrodes 203, the Mo foils 204 and the external electrode connection terminals 205 belonging to the first and second electrode parts 208a and 208b, a suffix "a" or "b" is added to each of the constituents to clarify whether it belongs to the first electrode part 208a or the second electrode part 208b.

However, when there is no need to distinguish the above constituents from each other, such suffixes are omitted herein. In such case, the constituents are referred to simply as 208, 203, 204 and 205, for example. In the present specification, as to the above-described or below-described constituents to be identified with suffixes other than the above constituents, the suffixes shall be omitted when there is no need to distinguish the constituents from each other.

The welding apparatus WLP7 includes a vacuum exhaust duct 206 hermetically connected to the open end of the vitreous silica tube 201. Connected to the vacuum exhaust duct 206 are a gas cylinder 301 containing noble gas therein through an opening/shutting valve 305, a vacuum pump 303 through an opening/shutting valve 306, and a regulating valve 308. As in the above, the vacuum exhaust duct 206, the gas cylinder 301, the vacuum pump 303, the opening/shutting valves 305 and 306, and the regulating valve 308 form a pressure reducing system VPR' similar to the pressure reducing system VPR shown in FIG. 1.

Additionally provided in the welding apparatus WLP7 is an optical pyrometer 250 for measuring the temperature of a portion 207 irradiated with the laser beam L, in the vitreous silica tube 201. The optical pyrometer 250 generates a temperature signal St indicative of a measured temperature, and feeds the signal back to the laser beam generator 2. The laser beam generator 2 radiates the laser beam L based on the temperature signal St to heat the irradiated portion 207 of the vitreous silica tube 201 until the temperature of the irradiated portion 207 reaches a predetermined temperature Tp.

Description is made below of the operation of sealing the vitreous silica tube 201 in the welding apparatus WLP7. The open end of the second electrode part 208b of the vitreous silica tube 201 is hermetically connected to the vacuum exhaust duct 206 of the pressure reducing system VPR'.

Next, the opening/shutting valve 306 is opened to drive the vacuum pump 303. At the time when an internal pressure P5 of the pressure reducing system VPR' reaches a first predetermined pressure P5a lower than the outside-air pressure P3, the opening/shutting valve 306 is closed to stop the vacuum pump 303. It is needless to say that the internal pressure of the vitreous silica tube 201 hermetically connected to the pressure reducing system VPR' through the vacuum exhaust duct 206 is also P5.

The opening/shutting valve 305 is then opened to open the gas cylinder 301, and injects noble gas into the pressure reducing system VPR'. At the time when the internal pressure P5 of the pressure reducing system VPR' reaches a second predetermined pressure P5b lower than the outside-air pressure P3, the opening/shutting valve 305 is closed. Note that the internal pressure P5 of the pressure reducing system VPR' is monitored by the regulating valve 308, and therefore the gas cylinder 301, the vacuum pump 303, and the opening/shutting valves 305 and 306 are controlled based on the monitoring result to regulate the internal pressure P5 at the first or second predetermined pressures P5a or P5b ($P5a < P5b < P5$).

As described above, to seal the second electrode part 208b of the vitreous silica tube 201 into which the noble gas is injected at the second predetermined pressure P5b, the laser beam generator 2 is moved in the direction Dv to irradiate the portion 207 with the laser beam L . At the same time, the temperature of the irradiated portion is monitored by the optical pyrometer 250. The irradiated portion 207 is heated until the temperature thereof reaches the predetermined temperature Tp at which the vitreous silica tube 201 is fused. Note that the vitreous silica tube 201 may be moved in the direction Dv without moving the laser beam generator 2.

When the temperature of the irradiated portion 207 reaches the fusing temperature Tp, the internal pressure P5 of the vitreous silica tube 201 becomes a pressure P5b' which is a little higher than the second predetermined pressure P5b due to the heat. The internal pressure P5, however, is remarkably reduced as compared with the outside-air pressure P3. Accordingly, when the irradiated portion 207 is fused by the heat of the laser beam to become soft, the wall of the vitreous silica tube 201 structuring the irradiated portion 207 is inwardly shrunk, and pressed against itself. The wall of the irradiated portion 207 is fused with time to be welded together, and thereby the vitreous silica tube 201 is vacuum-sealed while catching the discharge electrode 203b, the Mo foil 204b, and the external electrode connection terminal 205b therein.

In the case of fusing vitreous silica, a $CO_2$ laser whose wavelength is 10.6 μm is suitable for the laser beam generator 2. That is to say, with the laser of 10.6 μm wavelength, vitreous silica can absorb the energy of the laser. Specifically, 1cc of vitreous silica can be adequately fused by being irradiated with 300W of $CO_2$ laser for several seconds to one minute. In the case of using general soda glass and borosilicate crown glass, the system can be simplified by employing a compact laser generator such as a high-power (less than 500W) semiconductor laser generator of 808nm and 915nm wavelength, for example.

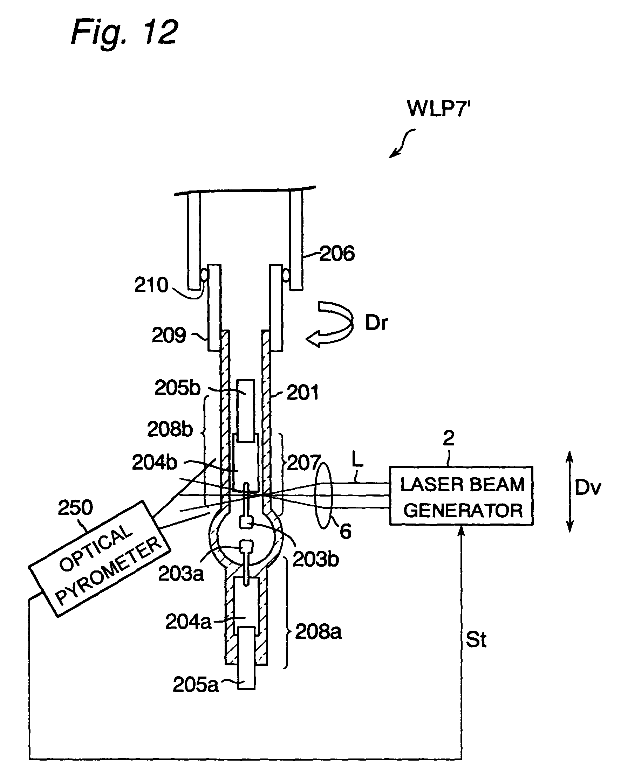

Referring to FIG. 12, a modification of the welding apparatus WLP7 is described. In a welding apparatus WLP7', the laser beam L is radiated while the vitreous silica tube 201 and the laser beam generator 2 are moved relatively to the direction Dv. To uniformly fuse the irradiated portion 207 of the vitreous silica tube 201, the laser beam L is radiated while the vitreous silica tube 201 is rotated in the direction Dr along the direction Dv. Thus, the vitreous silica tube 201 can be uniformly heated with respect to its diameter direction, and thereby sealed in an accurate shape. To this end, in the welding apparatus WLP7', a piece lathe 209 is hermetically connected via sliding O rings 210 to the inside of the open end of the vacuum exhaust duct 206 in the pressure reducing system VPR' (not shown for better viewability). The open end of the vitreous silica tube 201 is hermetically connected to the piece lathe 209 in place of the vacuum exhaust duct 206 herein.

The operation in the welding apparatus WLP7' is identical to the operation in the welding apparatus WLP7 except that the laser beam L is radiated to the irradiated portion 207 while the vitreous silica tube 201 is rotated in the direction Dr by use of the piece lathe 209, and therefore the description of the operation is omitted here.

Note that the width of the laser beam L must be wider than the diameter of the vitreous silica tube 201 to irradiate the tube 201 as uniformly as possible. In addition, when the rotation is too slow, the temperature tends to vary from place to place, and when the rotation is too fast, the glass tube is twisted. Therefore, the condition for the rotation must be appropriately set according to the weight of the glass tube.

While the vitreous silica tube 201 is rotated by using the piece lathe 209 in the present example, both lathes can be also used without problems. In addition, while the vitreous silica tube 201 is sealed in the evacuated state in the present example, the Mo foil 204b of the second electrode part 208b may be sealed while being fused by the laser beam in the state that the second electrode part 208b is tentatively sealed in advance to reduce the internal pressure of the vitreous silica tube 201.

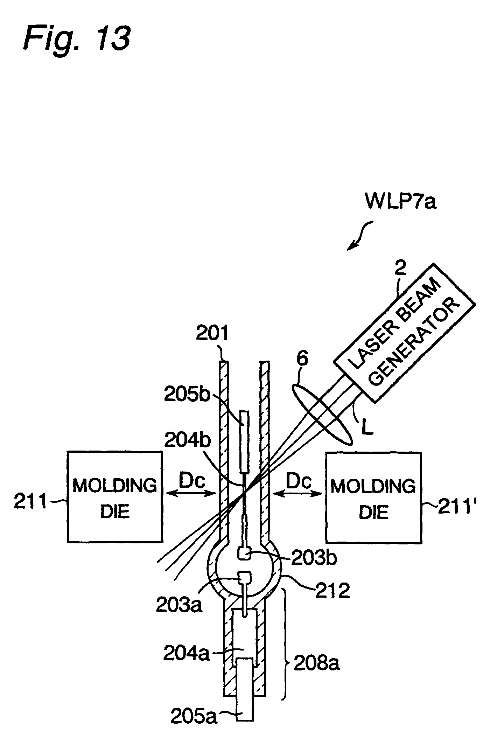

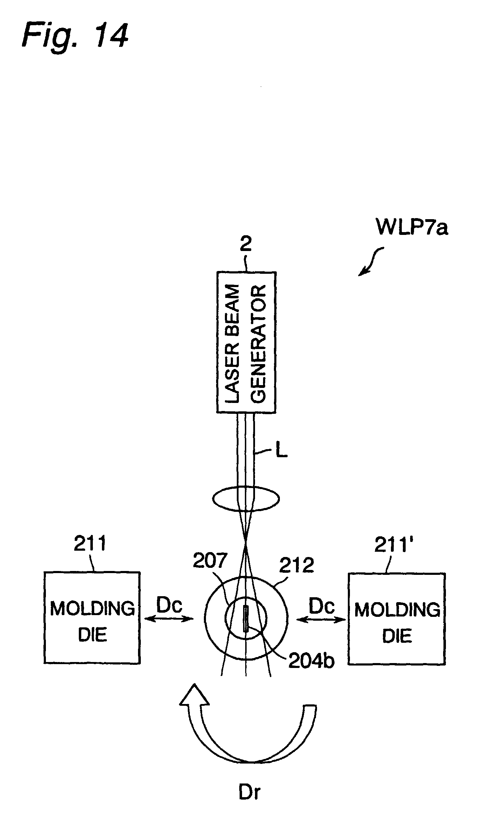

Next, referring to FIGS. 13 and 14, described below is an embodiment in which the irradiated portion 207 is fused with the laser beam L, and thereafter pressurized and molded with a molding die to mold the outside shape of the vitreous silica tube 201 and strengthen hermetic sealing of the Mo foils 204 with the vitreous silica tube 201.

In FIG. 13, a side view of a welding apparatus WLP7a in the present example is shown. Note that the welding apparatus WLP7a is obtained by adding a molding apparatus (not shown) including a pair of molding dies 211 and 211' to the welding apparatus WLP7 shown in FIG. 11 and the welding apparatus WLP7' shown in FIG. 12. Therefore, the pressure reducing system VPR' and the optical pyrometer 250 are omitted in FIG. 13 for better viewability. For convenience in drawing the figure, the laser beam generator 2 is illustrated as being placed in the slanting direction with respect to the vitreous silica tube 201, but in reality, the laser beam generator 2 is placed vertically in the direction DV of the length of the vitreous silica tube 201.

Shown in FIG. 14 is a top plane view of the welding apparatus WLP7a whose side view is shown in FIG. 13. The vitreous silica tube 201 is placed so that the Mo foil 204 is virtually parallel to the surfaces pressed by the pair of molding dies 211 and 211'. Accordingly, since the laser beam L is not interrupted by the molding dies 211 and 211', attention should be given to only the reflection of the laser beam L. To this end, for example, the radiation of the laser beam L may be stopped at the beginning of the press welding process, thereby preventing an operator and the like from being affected by the reflection of the laser beam L from the molding dies 211 and 211'.

In general, the electrode 203 for a discharge lamp and a halide lamp made of vitreous silica is vacuum-sealed by press welding of the Mo foil 204 and the vitreous silica tube 201. The thermal expansion coefficient of metal (the discharge electrode 203 and the external connection terminal 205) is significantly higher than that of quartz (the vitreous silica tube 201). Therefore, when the completed lamp becomes hot while being used, the discharge electrodes 203a and 203b are elongated toward the opposite sides thereof since they have high thermal expansion coefficients, and are fixed with the vitreous silica tube 201 having a low thermal expansion coefficient. In this embodiment, the elongation of the discharge electrodes 203a and 203b is decreased with the plasticity of the thin Mo foil 204. As shown in FIGS. 13 and 14, the laser beam L is radiated from one direction, and the molding dies 211 and 211' for pressing and welding the vitreous silica tube 201 are placed on the both sides thereof. It is to be noted that the pair of molding dies 211 and 211' are moved in the direction Dc, that is, moved toward the opposite sides thereof to press and weld the portion to be sealed (the irradiated portion 207) of the electrode 208 in the vitreous silica tube 201 placed between the molding dies 211 and 211'.

In the case of using a conventional gas burner, it is required to temporarily move the burner at the beginning of the press welding process to position the head of the burner in the vicinity of the portion to be fused. However, in the case of using the laser beam L as in the present embodiment, it is not required to move the laser beam generator 2, which is a heat source, from the vicinity of the vitreous silica tube 201. Thus, it is possible to readily advance to the press welding process and simplify the system of the movable portions.

(Eighth Embodiment)

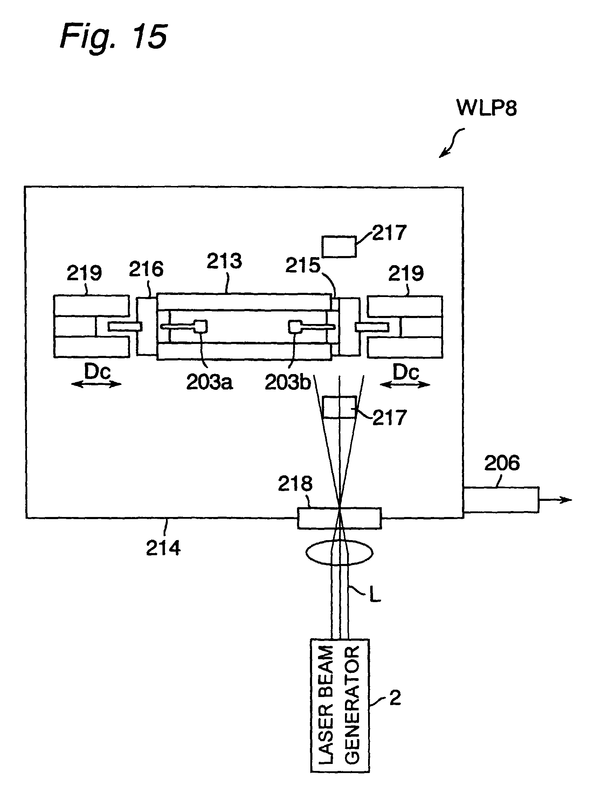

Referring to FIG. 15, a welding apparatus according to an eighth embodiment of the present invention is described. A welding apparatus WLP8 according to the present embodiment is suitable for welding or vacuum-sealing ceramics. The welding apparatus WLP8 includes a vacuum vessel 214 hermetically connected to the above-described pressure reducing system VPR (not shown for better viewability). A laser beam window 218 is provided on the vacuum vessel 214. In the above structure, the laser beam L is emitted from the laser beam generator 2 placed outside of the vacuum vessel 214, then gathered by the condenser 6, and radiated through the laser beam window 218 to the object to be fused placed inside of the vacuum vessel 218.

A melting frit 215 is previously inserted in the portion to be sealed which is between a ceramic tube 213 containing discharge electrodes 203 and the cermet component 216. The ceramic tube 213 and the cermet components 216 are set in the vacuum vessel 214 in such positions that the laser beam L is radiated to the portion to be sealed through the laser beam window 218. Note that a ring-shaped suscepter 217 is provided around the portion to be sealed.

Further provided are press welders 219 moving from the both sides of the melting frit 215 in the direction Dc parallel to the direction Dv of the length of the ceramic tube 213. The suscepter 217 is provided around the portion to be sealed to receive the radiated laser beam L on the periphery. After absorbing the heat energy, the suscepter 217 radiates the energy from the inner periphery toward the portion to be sealed, thereby enhancing the efficiency of utilizing the heat of the laser beam L.

The suscepter 217 may be composed of steel or stainless steel. Alternatively, the suscepter 217 may be composed of C (carbon) or SiC (silicon carbide) to rise in temperature to approximately 2000 °C. The operation is basically performed in a vacuum atmosphere or noble gas atmosphere to inhibit oxidation of the object.

In the above condition, the ceramic tube 213 and the cermet component 216 are set. After that, vacuum-sealing operation is performed in the procedure described below.

Process 1. In the condition where the components of the ceramic tube 213 are placed in the vacuum vessel 214, the vacuum vessel 214 is evacuated.

Process 2. Next, noble gas and the like is filled into the vacuum vessel 214 so that the internal pressure thereof reaches a predetermined one. At this time, it is ensured that the internal pressure of the ceramic tube 213 is reduced to the pressure (the internal pressure P5) lower than the atmospheric pressure P3. In the case where the internal pressure of the ceramic tube 213 becomes higher than the atmospheric pressure P3 at room temperatures or when being heated, it is required to render the internal pressure of the ceramic tube 213 lower than the atmospheric pressure P3 by providing a cooling trap (not shown) to cool the gas and the like in the vacuum vessel 214 and reduce the volume thereof.

Process 3. In the above-described condition, the laser beam L is radiated to the suscepter 217 through the window 218 placed on the vacuum vessel 214. The suscepter 217 then absorbs the heat of the laser beam L. As a result, the melting frit 215 placed on the inner periphery side of the suscepter 217 is melted by the radiation heat. The melting frit 215 is generally melted at 500 to 600 °C. Accordingly, it is more efficient to melt the melting frit 215 to bond the ceramic tube 213 and the cermet component 216 together, as compared with the case of welding vitreous silica or ceramics which are melted at 1500 to 2000 °C.

Process 4. In the above condition, the cermet component 216 and the ceramic tube 213 are pressed and welded from the both sides thereof by the press welders 219.

In the above-described process, vacuum-sealing can be realized in the state that the electrode and the like is inserted in the ceramic tube. In the present example, the portion to be melted is specified by the suscepter 217 to absorb the heat of the laser beam, thereby making it possible to efficiently melt and heat only the predetermined portion.

In addition, by utilizing the cooling trap in the process 2, it is possible to encapsulate a high-vapor pressure substance in the ceramic tube 213. The high-vapor pressure substance is a chemical substance required in a lamp such as mercury and metal halide.

As the laser beam source in this case, a YAG laser, an excimer laser, or a semi-conductor laser can be used. As the material of the laser beam window 218, vitreous silica is used. To receive the heat more uniformly, the ceramic tube 213 or the suscepter 217 may be rotated.

When a material having high thermal conductivity is used as the suscepter 217, the object is heated more evenly. Carbon and tungsten have conductivity of approximately 10 to 100 times as high as glass. Alternatively, SiC suppresses sublimation better than carbon, which allows the temperature to rise higher. To heat the object at a low temperature below 1000 °C, stainless steel, steel and the like may be used.

In order to heat the object more evenly, the suscepter 217 may be made thicker to have larger heat capacity. In some instances, a thermal insulating material such as aluminum oxide may be provided around the periphery of the suscepter 217 to improve the heat retentivity thereof. Moreover, by changing the shape of the suscepter, it is possible to distribute the temperature of the portion to be melted in a desirable pattern, and also apply heat to the portion such that the heat is adaptable to the shape of the portion.

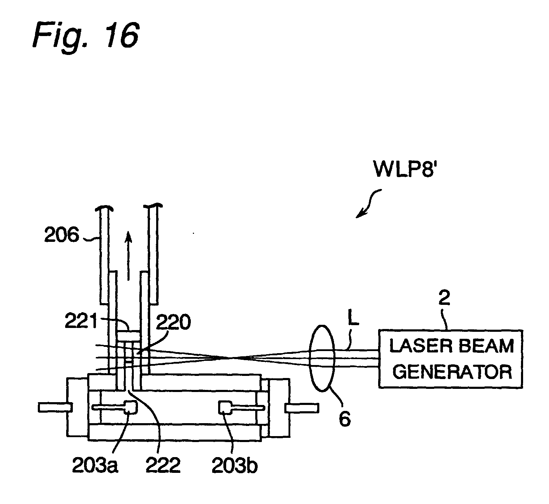

Shown in FIG. 16 is a modification of the welding apparatus WLP8 described referring to FIG. 15 as another method of sealing the ceramic tube 213. In this method, as shown in FIG. 16, a direct exhaust duct 220 is provided with the ceramic tube 213. The entire vacuum vessel 214 is evacuated, and filled with gas in the welding apparatus WLP8. However, in a welding apparatus WLP8' according to the present modification, the ceramic tube 213 is vacuum-sealed in the same process when the vitreous silica tube 201 is vacuum-sealed in the welding apparatus WLP7 and WLP7'. In the case of manufacturing a ceramic lamp, the discharge electrodes 203 are burned and connected to the ceramic tube 213 in advance.

As shown in FIG. 16, the inside of the ceramic tube 213 is evacuated by the pressure reducing system VPR' (not shown) through the vacuum exhaust duct 206 connected to a ceramic exhaust duct 220. After a chemical such as buffer gas is encapsulated, the frit (215) or a sealing component 221 such as ceramics is set in an exhaust open 222. The ceramic tube 213 is not still vacuum-sealed in this state. Therefore, the portion to be sealed is irradiated and fused with the laser beam L, and thereby becomes rigid. The ceramic tube 213 is thus vacuum-sealed.

In the above method, even if the vacuum vessel 214 shown in FIG. 15 is not provided, it is possible to vacuum-seal the ceramic tube 213 by the difference between the atmospheric pressure P3 and the internal pressure P5 of the ceramic tube 213 by using the ceramic tube 213 as an exhaust apparatus in the same method as that of sealing of vitreous silica tube. Besides, since only ceramics is used here in the sealing, there are a few materials which react with the sealing material for the lamp and the substances composing the lamp. This enables the life span of the lamp to be longer.

(Ninth Embodiment)

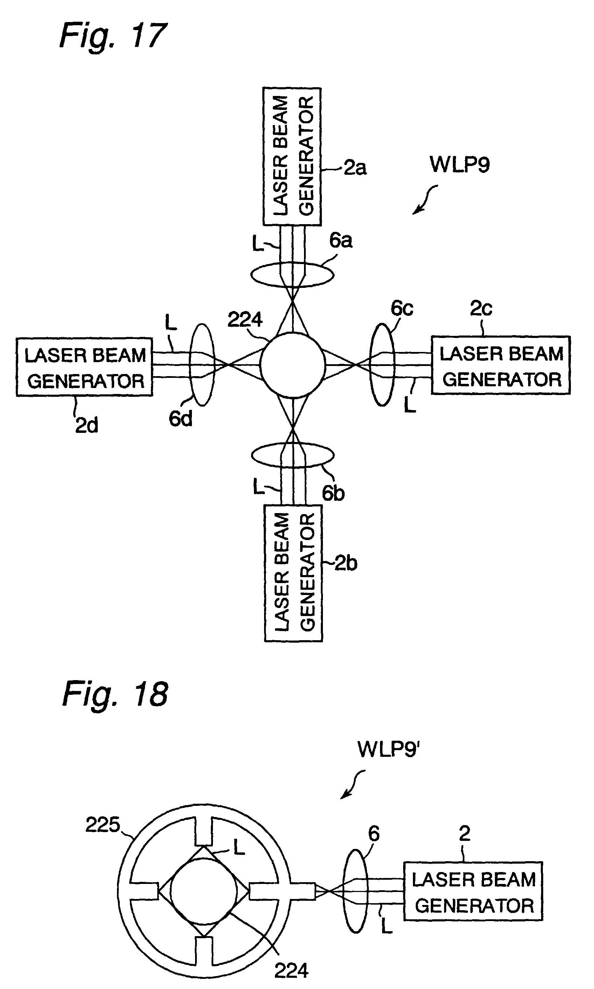

With reference to FIG. 17, a welding apparatus according to a ninth embodiment of the present invention is described. In the welding apparatus WLP7, WLP7', WLP7a, WLP8, and WLP8' according to the above-described seventh and eighth embodiments, the laser is basically radiated from one direction. However, in order to irradiate and fuse the portion to be sealed, it is desirable to radiate the laser beam as uniformly as possible. To this end, a welding apparatus WLP9 according to the present example uses a plurality of laser beam sources to radiate laser beams to an object 224 made of ceramics or vitreous silica from the surroundings thereof and weld the object 224.

In the welding apparatus WLP9, laser beams La, Lb, Lc, and Ld are radiated to the object 224 from four laser beam sources consisting of four laser beam generators 2a, 2b, 2c, and 2d and corresponding condensers 6a, 6b, 6c, and 6d, respectively. Note that it is also possible to combine the pressure reducing system VPR' and the optical pyrometer 250 with the welding apparatus WLP9 as in the case with the welding apparatus WLP7 to WLP8 shown in FIGS. 11 to 16.

The use of this apparatus makes it possible to uniformly heat the object, and lower the electric power of the individual lasers. This therefore allows use of compact laser beam generators. As the electric power is larger, an oscillator of each laser beam generator becomes longer, resulting in upsizing of the laser beam generator. On the contrary, as the electric power is smaller, each laser beam generator can be downsized. In tens of the cost, it is also more advantageous to use a plurality of compact laser beam generators. In FIG. 18, a welding apparatus WLP9' is shown as a modification of the welding apparatus WLP9 shown in FIG. 17. In the welding apparatus WLP9', the output from the laser beam generator 2 is branched by an optical fiber 225 to irradiate the object from the surroundings thereof. When the optical path is long, the output is weakened. Therefore, it is required to make the fiber large in size in the part distant from the laser beam generator 2 and make the fiber small in size in the part close to the generator. The output is thus adjusted so as to be uniform as possible.

(Tenth Embodiment)

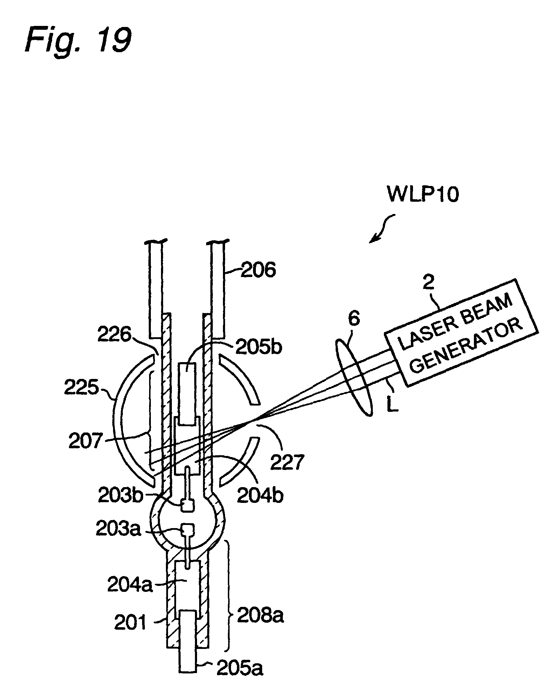

Referring to FIG. 19, a welding apparatus according to a tenth embodiment of the present invention is described. A welding apparatus WLP10 according to the present example basically has the same structure as in the case where a reflector 225 is provided around the second electrode part 208b of the vitreous silica tube 201 in the welding apparatus WLP7 and WLP7' shown in FIGS. 11 and 12.

The reflector 225 is preferably shaped like an integral sphere, and has a hole 226 for inserting the vitreous silica tube 201 therein and a hole 227 for letting in the laser beam L. After the vitreous silica tube 201 is set in the insertion hole 226 and the laser beam is radiated from the irradiation hole 227, the laser beam is reflected inside of the integral-globe-shaped reflector 225. Thus, the portion to be fused or sealed is uniformly heated.

While the reflector 225 is in an integral sphere shape here, the reflector 225 may have any shape if the portion to be irradiated can be accurately irradiated. In addition, a small-sized exhaust nozzle is provided in the vicinity of the insertion hole 226 of the reflector to exhaust evaporated silica occurred when the vitreous silica is fused, thus removing dust. Alternatively, a hole may be additionally provided in any portion of the reflector 225 to exhaust dust if it causes no problem in gathering light. Moreover, in the case where a plurality of lasers are used or a fiber is added to the welding apparatus WLP10, the hole 227 may be increased in number for letting in laser beams. In the above-described manner, the sample is shield with the reflector, which virtually eliminates ill influence of the laser beam returning from the sample on the operator.

Furthermore, to prevent the heated reflector from being damaged, breeze or water may be flowed around the periphery of the reflector to cool the same. In the case where a substance apt to evaporate is to be encapsulated in the object to be fused, the substance is placed outside of the reflector 225 to weld and seal the object without being vaporized.

The welding and vacuum-sealing method of the vitreous silica, ceramics, and the like with the laser beam L in the above manner is more accurate than that in the conventional method. Especially, in the case where a chemical apt to evaporate is to be encapsulated in the object to be fused, the object can be accurately sealed. Particularly, in the case where the object to be fused is small in size, the object can be welded without being thermally influenced in the portion not to be fused. In addition, in the case where the shape of the portion to be fused is molded, arrangement of the apparatus can be simplified, thereby stabilizing sealing process and facilitating maintenance of the apparatus.

INDUSTRIAL APPLICABILITY

As described in the above, this invention can be effectively used to fuse a material having a high melting point such as glass and ceramics and to weld or vacuum-seal the material to such high-melting material or a different material such as metal.

**Claims**

1. A welding apparatus irradiating an object made of either vitreous silica or ceramics with a laser beam to thermally fuse and bond said object, comprising:

    internal pressure regulating means for reducing the internal pressure of said object to a second pressure lower than a first pressure which is the atmosphere pressure of said object, and maintaining said second pressure; and
    thermal fusing means for irradiating a predetermined portion of said object, whose internal pressure is reduced and maintained, with said laser beam to thermally fuse said predetermined portion,
    said thermally fused portion of said object being shrunk and welded by the difference between said first pressure and said second pressure.

2. The welding apparatus according to claim 1, further comprising inert atmospheric means for maintaining said object, whose internal pressure is reduced, in an inert atmosphere at said first pressure and penetrating said laser beam toward said predetermined portion of said object, wherein said thermally fused portion is shrunk and welded by the pressure of said inert atmosphere.

3. The welding apparatus according to claim 2, wherein said laser beam is radiated toward said object from the outside of said inert atmospheric means.

4. The welding apparatus according to claim 3, wherein said inert atmospheric means includes a laser beam penetrable part for penetrating said laser beam.

5. The welding apparatus according to claim 4, wherein said laser beam penetrable part is made of a material mainly composed of vitreous silica in the case where said laser beam is either a YAG laser or an excimer laser.

6. The welding apparatus according to claim 4, wherein said laser beam penetrable part is made of a material mainly composed of ZnSe in the case where said laser beam is a $CO_2$ laser.

7. The welding apparatus according to claim 4, wherein said laser beam penetrating means gathers said laser beam on said object.

8. The welding apparatus according to claim 2, wherein said inert atmosphere is inert gas selected from an inert gas group including noble gas and nitrogen gas.

9. The welding apparatus according to claim 2, wherein said inert atmospheric means includes:

    suction means for sucking said inert gas to take in the same;
    refining means for removing impurities from said sucked inert gas to refine the same; and
    returning means for returning said refined inert gas to said inert atmospheric means.

10. The welding apparatus according to claim 9, wherein said refining means is provided outside of said inert atmospheric means.

11. The welding apparatus according to claim 2, wherein the external atmosphere pressure of said inert atmospheric means is higher than said second pressure, and lower than said first pressure.

12. The welding apparatus according to claim 11, wherein said first pressure is higher than said external atmosphere pressure by a difference of a water pressure of several mm.

13. The welding apparatus according to claim 1, further comprising a suscepter provided between said predetermined portion of said object and said thermal fusing means so as to interrupt said laser beam, wherein the heat energy of said laser beam received by said suscepter on a first surface thereof is radiated from a second surface thereof to said predetermined portion of said object.

14. The welding apparatus according to claim 13, wherein said suscepter is in a ring shape containing said object therein, and radiates said heat energy of said laser beam received with the outer periphery of said suscepter from the inner periphery thereof to said predetermined portion of said object.

15. The welding apparatus according to claim 14, wherein said suscepter is rotated about said object, and uniformly heated by said laser beam.

16. The welding apparatus according to claim 1, further comprising cooling means for partially cooling said object.

17. The welding apparatus according to claim 16, wherein said cooling means further comprises:

refrigerant means for containing therein any refrigerant of cold air, cooling water, and liquid nitrogen; and
refrigerant circulating means for taking said refrigerant therein from said refrigerant means, then circulating the seine around the periphery of said object, and returning the same to said refrigerant means.

18. The welding apparatus according to claim 17, wherein said cooling means includes

any one of a nozzle for spraying said refrigerant to said object, and a tank for containing said refrigerant therein to soak said object in said refrigerant.

19. The welding apparatus according to claim 1, wherein said laser beam is radiated substantially uniformly to the outer periphery of said predetermined portion of said object.

20. The welding apparatus according to claim 19, wherein said thermal fusing means comprises

a plurality of laser beam generators.

21. The welding apparatus according to claim 19, wherein said thermal fusing means comprises

an optical fiber for branching said laser beam into a plurality of beams and outputting said beams to the outer periphery of said predetermined portion of said object.

22. The welding apparatus according to claim 1, wherein said internal pressure regulating means includes:

internal pressure detecting means for detecting the internal pressure of said object;
piping means whose one end is connected to an open end of said object; and
vacuum pumping means connected to another end of said piping means for vacuum pumping the inside of said object and thereby making the pressure detected by said internal pressure detecting means said second predetermined internal pressure.

23. The welding apparatus according to claim 1, comprising rotating holder means for holding the end of said object and rotating said object to uniformly radiate said laser beam over the entire perimeter of said predetermined portion of said object.

24. The welding apparatus according to claim 1, further comprising:

laser beam output detecting means for detecting the output of said laser beam; and
laser energy adjusting means for controlling the energy of said laser beam based on the detected output of said laser beam.

25. The welding apparatus according to claim 1, comprising rotating means for rotating said object about an axis substantially vertical to said laser beam.

26. The welding apparatus according to claim 1, further comprising a reflector having its focal point in the vicinity of said predetermined portion of said object to be thermally fused.

27. The welding apparatus according to claim 26, wherein said reflector is in an integral sphere shape, and contains said predetermined portion of said object is held in said reflector.

28. The welding apparatus according to claim 27, wherein said reflector has:

a first open for inserting said object therein; and
at least one second open for letting in said laser beam,
wherein said laser beam entered from said second open is reflected inside of said integral-globe-shaped reflector to uniformly irradiate and heat said predetermined portion of said object inserted from said first open.

29. The welding apparatus according to claim 27, wherein said reflector further has

an open for aspirating dust included in said reflector.

30. The welding apparatus according to claim 27, further comprising cooling means on the outer periphery side of said reflector to cool said reflector.

31. The welding apparatus according to claim 1, comprising moving means for moving said laser beam in the direction substantially parallel to said object.

32. The welding apparatus according to claim 1, comprising:

a pair of molding dies opposing to each other while sandwiching said object therein, and having opposing surfaces substantially parallel to said object; and
molding die moving means for moving said pair of molding dies in the direction substantially vertical to said object,
wherein said thermal fused portion is sandwiched by said pair of opposing surfaces to be pressed and molded.

33. The welding apparatus according to claim 1, wherein said laser beam is any one of a YAG laser, an excimer laser, a $Co_2$ laser, and a semi-conductor laser.

34. The welding apparatus according to claim 7, further comprising:

laser beam output detecting means for detecting the output of said laser beam; and
light gathering position controlling means for moving said laser beam penetrating means gathering said laser beam on the optical path thereof based on the detected output of said laser beam.

35. A welding apparatus for welding an object made of either vitreous silica or ceramics by means of a bonding member provided in a predetermined portion of said object, comprising:

internal pressure regulating means for reducing the internal pressure of said object to a second pressure lower than a first pressure which is the atmosphere pressure of said object, and maintaining said second pressure; and
thermal melting means for irradiating said bonding member with a laser beam, and thermally melting said bonding member,
said object being welded by said thermally melted bonding member.

36. The welding apparatus according to claim 35, further comprising inert atmospheric means for maintaining said object, whose internal pressure is reduced, in an inert atmosphere at said first pressure, and penetrating said laser beam toward said bonding member.

37. The welding apparatus according to claim 35, further comprising pressing means for pressing said object against said thermally melted bonding member.

38. The welding apparatus according to claim 35, comprising rotating holder means for holding the end of said object and rotating said object to uniformly radiate said laser beam over the entire perimeter of said predetermined portion of said object.

39. The welding apparatus according to claim 37, wherein said pressing means

rotates with respect to a rotation axis while holding the end of said object, and
includes holding means for moving along said rotation axis.

40. The welding apparatus according to claim 39, wherein said pressing means are both lathes.

41. The welding apparatus according to claim 1, further comprising dust collecting means for removing scattered substances generated in the vicinity of a vitreous silica tube or a ceramic tube to be welded or vacuum-sealed.

42. The welding apparatus according to claim 2, wherein said inert atmospheric means includes

dust collecting means for removing scattered substances generated in the vicinity of a vitreous silica tube or a ceramic tube to be welded or vacuum-sealed.

43. A welding method of irradiating an object made of either vitreous silica or ceramics with a laser beam and thermally fusing and bonding said object, comprising:

an internal pressure regulating step of reducing the internal pressure of said object to a second pressure lower than a first pressure which is the atmosphere pressure of said object, and maintaining said second pressure;
a thermal fusing step of irradiating a predetermined portion of said object, whose internal pressure is reduced and maintained, with said laser beam to thermally fuse said predetermined portion; and

a bonding step of shrinking and welding the thermally fused portion of said object by the difference between said first pressure and said second pressure.

44. The welding method according to claim 43, further comprising the steps of:

maintaining said object, whose internal pressure is reduced, in an inert atmosphere at said first pressure; and
penetrating said laser beam toward said predetermined portion of said object,
wherein said thermally fused portion is shrunk and welded by said inert atmospheric pressure.

45. The welding method according to claim 43, further comprising the steps of:

receiving said laser beam on a first surface of a suscepter provided between said predetermined portion of said object and said thermal fusing means so as to interrupt said laser beam, and absorbing the heat energy of said laser beam; and
radiating the heat energy absorbed on said first surface of said suscepter from a second surface of said suscepter to said predetermined portion of said object.

46. The welding method according to claim 43, further comprising the step of pressing and molding said thermally fused portion by moving a pair of molding dies in the direction substantially vertical to said object and by sandwiching said thermal fused portion by a pair of opposing surfaces, said pair of molding dies opposing to each other while sandwiching said object therein and having said pair of opposing surfaces substantially parallel to said object.

47. A welding method of welding an object made of either vitreous silica or ceramics by means of a bonding member provided in a predetermined portion of said object, comprising:

an internal pressure regulating step of reducing the internal pressure of said object to a second pressure lower than a first pressure which is the atmosphere pressure of said object, and maintaining said second pressure; and
a thermal melting step of irradiating said bonding member with a laser beam, and thermally melting said bonding member,
said object being welded by said thermally melted bonding member.

48. The welding method according to claim 47, further comprising the step of pressing said object against said thermally melted bonding member.

49. The welding method according to claim 47, further comprising the steps of:

maintaining said object, whose internal pressure is reduced, in an inert atmosphere at said first pressure; and
penetrating said laser beam toward said bonding member.

50. The welding method according to claim 49, further comprising the step of pressing said object against said thermally melted bonding member.

# Fig. 1

Block diagram showing WLP1 system with GPR (GAS CYLINDER 11, VACUUM PUMP 10, 28) and GAR (ATMOSPHERIC GAS REFINER 30, Pi, Pr) connected to chamber 1, with components 8, 3, 2d, L', 5, 4, 6, 7, LASER BEAM GENERATOR 2, L, and VPR (gauge 21, VACUUM PUMP 20).

*Fig. 2*

*Fig. 3*

*Fig. 4*

## Fig. 5

WLP2

Fig. 6

WLP3

1

3

4

5

2d

RF

13

14

13P

6

L

2

LASER BEAM
GENERATOR

# Fig. 7

WLP3'

2
LASER BEAM GENERATOR

1

3

2d

4

5

6

L

19

RF

18

13T    16

15

## Fig. 8

WLP4

1'

1

32

39    35    39    37

3L    6

2

9

34    LASER BEAM GENERATOR

43

38    P    36

*Fig. 9*

WLP5

LASER BEAM
GENERATOR

Fig. 10

WLP6

LASER BEAM
GENERATOR

POWER
SOURCE

# Fig. 11

# Fig. 12

WLP7'

# Fig. 13

WLP7a

LASER BEAM GENERATOR

2

6

L

201

205b

204b

211 — MOLDING DIE

Dc

Dc

MOLDING DIE — 211'

203b

212

203a

204a

208a

205a

# Fig. 14

WLP7a

2

LASER BEAM GENERATOR

L

211

MOLDING DIE

Dc

207    212

Dc

211'

MOLDING DIE

204b

Dr

# Fig. 15

WLP8

## Fig. 16

WLP8'

206

221    220

203a    222    203b

L

2

6

LASER BEAM
GENERATOR

## Fig. 17

## Fig. 18

## Fig. 19

# Fig. 20

## INTERNATIONAL SEARCH REPORT

| International application No. |
| --- |
| PCT/JP99/01711 |

**A. CLASSIFICATION OF SUBJECT MATTER**
Int.Cl⁶ B23K26/00, H01J9/26

According to International Patent Classification (IPC) or to both national classification and IPC

**B. FIELDS SEARCHED**

Minimum documentation searched (classification system followed by classification symbols)
Int.Cl⁶ B23K26/00-26/12, H01J9/26

Documentation searched other than minimum documentation to the extent that such documents are included in the fields searched

| | | | |
| --- | --- | --- | --- |
| Jitsuyo Shinan Koho | 1926-1999 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 50-37913, B (N.V. Philips' Gloeilampenfabrieken), 5 December, 1975 (05. 12. 75) & FR, 2043169, A5 & NL, 6905675, A | 1-50 |
| A | JP, 55-64338, A (Tokyo Shibaura Electric Co., Ltd.), 15 May, 1980 (15. 05. 80) (Family: none) | 1-50 |
| A | JP, 55-24327, A (Tokyo Shibaura Electric Co., Ltd.), 21 February, 1980 (21. 02. 80) (Family: none) | 1-50 |
| A | JP, 63-175315, A (Toshiba Corp.), 19 July, 1988 (19. 07. 88) (Family: none) | 1-50 |
| A | JP, 56-129935, U (Tokyo Shibaura Electric Co., Ltd.), 2 October, 1981 (02. 10. 81) (Family: none) | 1-50 |

☐ Further documents are listed in the continuation of Box C.    ☐ See patent family annex.

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 29 June, 1999 (29. 06. 99) | 13 July, 1999 (13. 07. 99) |

| Name and mailing address of the ISA/ | Authorized officer |
| --- | --- |
| Japanese Patent Office | |
| Facsimile No. | Telephone No. |

Form PCT/ISA/210 (second sheet) (July 1992)